# EUROPEAN PATENT APPLICATION

(11) **EP 4 693 035 A1**
(43) Date of publication of application: **11.02.2026**
(21) Application number: 24835056.3
(22) Date of filing: 26.02.2024
(51) Int. Cl.: G06F 9/445, G06F 9/48, G06F 9/50

(54) **SYSTEM RESOURCE SCHEDULING METHOD, ELECTRONIC DEVICE, AND STORAGE MEDIUM**

(30) Priority: 05.07.2023 CN 202310824242
(71) Applicant: Honor Device Co., Ltd., Shenzhen, Guangdong 518040 (CN)
(72) Inventor: HAN, Junhui, Shenzhen, Guangdong 518040 (CN)
(74) Representative: MERH-IP Matias Erny Reichl Hoffmann Patentanwälte PartG mbB
(86) International application number: PCT/CN2024/078506
(87) International publication number: WO 2025/007569

(57) **Abstract**

This application relates to the field of terminal technologies, and provides a system resource scheduling method, an electronic device, and a storage medium. The method includes: performing freeze control on all or some applications running in a background when an interactive operation triggered by a user on a display interface of the electronic device is detected, where the freeze control is used to reclaim a system resource allocated to a corresponding application; allocating the reclaimed system resource to a service corresponding to the interactive operation on the display interface; and releasing the freeze control on the application when the service corresponding to the interactive operation on the display interface is completed. Through the method, freeze control for a background application is no longer performed based on a fixed preset time, but freezing is performed as required based on a coverage duration of a service corresponding to a foreground operation, thereby improving flexibility, reasonableness, and an effect of the freeze control. No conflict occurs in a freezing strategy under a high-frequency multi-operation sequence, thereby effectively increasing a foreground response speed and enhancing user experience.

## Description

This application claims priority to Chinese Patent Application No. 202310824242.1, filed with the China National Intellectual Property Administration on July 05, 2023 and entitled "SYSTEM RESOURCE SCHEDULING METHOD, ELECTRONIC DEVICE, AND STORAGE MEDIUM", which is incorporated herein by reference in its entirety.

### TECHNICAL FIELD

This application relates to the field of terminal technologies, and in particular, to a system resource scheduling method, an electronic device, and a storage medium.

### BACKGROUND

With the continuous enrichment of functions of an electronic device, an increasing quantity of applications are installed in the electronic device, and functions of the applications are also increasingly abundant and powerful. A user usually installs many applications in an electronic device. Some of the applications in the electronic device are pre-installed in the electronic device, and other applications are installed by the user during subsequent use.

When a user opens an application (application, APP) in the foreground during use of the electronic device, another APP that has been opened before is to run in the background. In this case, if the APP running in the background occupies excessively many system resources, insufficient supply of system resources of the foreground APP is caused, and then problems such as a long startup time and stuttering occur.

### SUMMARY

To resolve the foregoing problem, this application provides a system resource scheduling method, an electronic device, and a storage medium, thereby improving flexibility, reasonableness, and an effect of freeze control, and effectively increasing a foreground response speed and enhancing user experience.

According to a first aspect, this application provides a system resource scheduling method, applied to an electronic device. The electronic device supports running of an application. The method includes: performing freeze control on all or some applications running in a background when an interactive operation triggered by a user on a display interface of the electronic device is detected, where the freeze control is used to reclaim a system resource allocated to a corresponding application; allocating the reclaimed system resource to a service corresponding to the interactive operation on the display interface; and releasing the freeze control on all or some of the applications running in the background when the service corresponding to the interactive operation on the display interface is completed.

In the solution, the interactive operation on the display interface may include an operation triggered by a user on a desktop of an electronic device, and an operation triggered by the user on an interface of an application. An objective of the interactive operation is to implement a corresponding service, for example, a service such as opening an application, transition, or triggering an animation effect. Through the foregoing technical solutions provided in this application, freeze control for a background application is no longer performed based on a fixed preset time, but freezing is performed as required based on a coverage duration of the service corresponding to the interactive operation on the display interface. When the user triggers the interactive operation on the display interface, that is, when a corresponding service is started, freeze control is started, and the freeze control is ended when the service corresponding to the interactive operation on the display interface is completed, thereby improving flexibility, reasonableness, and the effect of the freeze control. No conflict occurs in a freezing strategy under a high-frequency multi-operation sequence, thereby effectively increasing a foreground response speed and enhancing user experience. In addition, in view of varying capabilities of chips used in the electronic device, in the solution of performing freeze control based on the fixed preset time used in the related art, engineering experiment adjustment of a product or chip granularity needs to be performed, to ensure an accurate time of the freeze control. However, the solution of this application is more flexible. Since a time length of the freeze control is not fixed, but the freeze control is performed as required based on the coverage duration of the service corresponding to the interactive operation on the display interface, the foregoing engineering experiment adjustment does not need to be performed, which is highly practical.

In a possible implementation, the performing freeze control on all or some applications running in a background when an interactive operation triggered by a user on a display interface of the electronic device is detected specifically includes:
reporting, by a hardware driver of the electronic device, an operation event corresponding to the interactive operation on the display interface to an input Input subsystem of the electronic device; and instructing, by the Input subsystem, a control group freeze Cgroups freezer subsystem of the electronic device to perform freeze control on all or some of the applications running in the background.

In the solution of this application, when the Input subsystem obtains the operation event reported by the hardware driver, the Input subsystem notifies the Cgroups subsystem that freeze control needs to be performed on the background application at this time, thereby implementing real-time triggering of the freeze control. In addition, the freeze control is performed relatively early, and the freeze control of the background program may be implemented in time.

In a possible implementation, when the interactive operation on the display interface is an operation triggered by the user on a desktop, the performing freeze control on all or some applications running in a background when an interactive operation triggered by a user on a display interface of the electronic device is detected specifically includes: reporting, by a hardware driver of the electronic device, an operation event corresponding to the interactive operation on the display interface to an input Input subsystem of the electronic device; reporting, by the Input subsystem, the operation event to a desktop application; and instructing, by the desktop application when determining, based on an identification result of the operation event, that freeze control needs to be performed, the control group freeze Cgroups freezer subsystem of the electronic device to perform freeze control on all or some of the applications running in the background.

In a possible implementation, the performing freeze control on all or some applications running in a background when an interactive operation triggered by a user on a display interface of the electronic device is detected specifically includes: determining that the user triggers the interactive operation on the display interface, and instructing the control group freeze Cgroups freezer subsystem of the electronic device to perform freeze control on all or some of the applications running in the background when a detection instrumentation point existing in a service path of an application is executed, where each detection instrumentation point is located in a service path of the interactive operation on each display interface in a framework layer Framework.

In a possible implementation, the service path is any one of the following: a startup service path of the application or a service path of a transition animation.

In a possible implementation, the system resource includes one or more of the following: a central processing unit CPU resource, a network bandwidth resource, an input/output I/O channel resource, or a framework layer Framework system resource.

In a possible implementation, the interactive operation on the display interface is starting a first application, and the releasing the freeze control on all or some of the applications running in the background when the service corresponding to the interactive operation on the display interface is completed specifically includes: determining that the service corresponding to the interactive operation on the display interface is completed after loading of a first frame of a main interface of the first application is completed, and releasing the freeze control on all or some of the applications running in the background.

In this case, CPU usage of the background application program may be recovered more quickly, thereby reducing impact on the background application. An excessively long time for loading a first frame of a content page as a result of the first application being affected by a network may be avoided, causing excessively long freezing time of the background application. The application may be an application that is opened in the foreground and not running in the background. In this case, a cold start of the application is implemented.

In a possible implementation, the interactive operation on the display interface is starting a first application, and the releasing the freeze control on all or some of the applications running in the background when the service corresponding to the interactive operation on the display interface is completed specifically includes: determining that the service corresponding to the interactive operation on the display interface is completed after loading of content of a first frame of the first application is completed, and releasing the freeze control on all or some of the applications running in the background.

When the application is an application already running in the background, a hot start of the application is implemented in this case, and the content of the first frame of the first application may be page content of the application when the application was placed in the background last time, or page content of the application after being refreshed.

In a possible implementation, the interactive operation on the display interface is starting a first application, and the releasing the freeze control on all or some of the applications running in the background when the service corresponding to the interactive operation on the display interface is completed specifically includes:
determining, when it is determined that the first application needs to connect to a network, that the service corresponding to the interactive operation on the display interface is completed after loading of a first frame of a main interface of the first application is completed, and releasing the freeze control on all or some of the applications running in the background; and
determining, when it is determined that the first application does not need to connect to the network, that the service corresponding to the interactive operation on the display interface is completed after loading of content of a first frame of the first application is completed, and releasing the freeze control on all or some of the applications running in the background.

Through this implementation, a specific completion moment of the service corresponding to the interactive operation on the display interface may be determined depending on whether the first application program needs to connect to the network, to implement flexible freeze control.

In a possible implementation, the interactive operation on the display interface is starting a camera application, and the releasing the freeze control on all or some of the applications running in the background when the service corresponding to the interactive operation on the display interface is completed specifically includes:
determining that the service corresponding to the interactive operation on the display interface is completed when a camera interface starts to display a preview picture, and releasing the freeze control on all or some of the applications running in the background.

In a possible implementation, the interactive operation on the display interface is tapping a shooting button on a camera application interface, and the releasing the freeze control on all or some of the applications running in the background when the interactive operation on the display interface is completed specifically includes:
determining that the service corresponding to the interactive operation on the display interface is completed when the camera application completes shooting and resumes display of the preview picture, and releasing the freeze control on all or some of the applications running in the background.

In a possible implementation, a foreground operation is triggering an animation effect on a desktop, and the releasing the freeze control on all or some of the applications running in the background when the service corresponding to the interactive operation on the display interface is completed specifically includes:
determining that the service corresponding to the interactive operation on the display interface is completed when the animation effect ends, and releasing the freeze control on all or some of the applications running in the background.

In a possible implementation, the foreground operation is triggering an animation effect on a desktop, the animation effect is specifically entering a leftmost home screen of the desktop from a home page of the desktop, and the releasing the freeze control on all or some of the applications running in the background when the service corresponding to the interactive operation on the display interface is completed specifically includes:
determining that the service corresponding to the interactive operation on the display interface is completed when loading of a first frame of an interface of the leftmost home screen of the desktop is completed, and releasing the freeze control on all or some of the applications running in the background.

In a possible implementation, the foreground operation is triggering the animation effect on the desktop, the animation effect is specifically entering a second page of the desktop from a first page of the desktop, and the releasing the freeze control on all or some of the applications running in the background when the service corresponding to the interactive operation on the display interface is completed specifically includes:
determining that the service corresponding to the interactive operation on the display interface is completed when loading of a first frame of an interface of the second page of the desktop is completed, and releasing the freeze control on all or some of the applications running in the background.

In a possible implementation, the foreground operation is triggering an animation effect on a desktop, the animation effect is specifically calling out a display interface of a background application from the desktop, and the releasing the freeze control on all or some of the applications running in the background when the service corresponding to the interactive operation on the display interface is completed specifically includes:
determining that the service corresponding to the interactive operation on the display interface is completed when loading of a first frame of the display interface of the background application is completed, and releasing the freeze control on all or some of the applications running in the background.

In a possible implementation, the foreground operation is triggering an animation effect on a desktop, the animation effect is specifically calling out a status bar interface from the desktop, and the releasing the freeze control on all or some of the applications running in the background when the service corresponding to the interactive operation on the display interface is completed specifically includes:
determining that the service corresponding to the interactive operation on the display interface is completed when loading of a first frame of the status bar interface is completed, and releasing the freeze control on all or some of the applications running in the background.

In a possible implementation, the interactive operation on the display interface is switching from a first page of a second application to a second page of the second application, and the releasing the freeze control on all or some of the applications running in the background when the service corresponding to the interactive operation on the display interface is completed specifically includes:
determining that the service corresponding to the interactive operation on the display interface is completed after loading of content of the second page is completed, and releasing the freeze control on all or some of the applications running in the background.

In a possible implementation, the interactive operation on the display interface is switching from a second page of a second application to a third page of a third application, and the releasing the freeze control on each of the applications when the service corresponding to the interactive operation on the display interface is completed specifically includes: determining that the service corresponding to the interactive operation on the display interface is completed after loading of content of the third page is completed, and releasing the freeze control on each of the applications.

For example, the second application is a shopping application, the third application is a payment application, and a jump to a payment page of the third application is performed through a checkout page of the second application for password input. For another example, the second application is a video playback software, and the third application is an instant messaging APP. The user may select, through a login interface of the video playback software, a login account as an account of the instant messaging APP, thereby triggering a page transition to the instant messaging APP for login authorization. The solution of this application may also be applied to the foregoing transition scenario. After a critical path of a service is triggered, a transition animation effect is smooth without stuttering through freeze control, thereby improving user experience.

In a possible implementation, the releasing the freeze control on all or some of the applications running in the background specifically includes: reclaiming the reclaimed system resource from the service corresponding to the interactive operation on the display interface; and reallocating the reclaimed system resource to all or some of the applications running in the background.

In this case, a system resource is reallocated to each application running in the background, and the system resource obtained by the background application may be the same as or different from that before freeze control.

In a possible implementation, the releasing the freeze control on all or some of the applications running in the background specifically includes: reclaiming the reclaimed system resource from the service corresponding to the interactive operation on the display interface; and allocating the reclaimed system resource, so that all or some of the applications running in the background recover the system resource before the freeze control.

According to a second aspect, this application further provides an electronic device. The electronic device includes a memory and a processor. The memory has a computer program stored therein, and the processor is configured to invoke and execute the computer program, to implement the system resource scheduling method according to any one of the foregoing implementations.

According to a third aspect, this application further provides a computer-readable storage medium. The computer-readable storage medium has a computer program stored therein. The computer program, when executed by an electronic device, implements the system resource scheduling method according to any one of the foregoing implementations.

### BRIEF DESCRIPTION OF DRAWINGS

FIG. 1 is a principle diagram I of a freeze control scheme in the related art;
FIG. 2A, FIG. 2B, and FIG. 2C are a schematic diagram I of a scenario according to this application;
FIG. 3 is a principle diagram II of a freeze control scheme in the related art;
FIG. 4A, FIG. 4B, and FIG. 4C are a schematic diagram II of a scenario according to this application;
FIG. 5 is an architecture diagram of a software system of an electronic device according to this application;
FIG. 6 is a flowchart of a system resource scheduling method according to an embodiment of this application;
FIG. 7 is a schematic diagram I of a principle according to an embodiment of this application;
FIG. 8 is a schematic diagram II of a principle according to an embodiment of this application;
FIG. 9 is a flowchart of another system resource scheduling method according to an embodiment of this application;
(a), (b), and (c) of FIG. 10 are a schematic diagram I of a scenario according to an embodiment of this application;
FIG. 11 is a flowchart of still another system resource scheduling method according to an embodiment of this application;
(a) and (b) of FIG. 12 are a schematic diagram II of a scenario according to an embodiment of this application;
FIG. 13 is a flowchart of yet another system resource scheduling method according to an embodiment of this application;
FIG. 14A, FIG. 14B, and FIG. 14C are a schematic diagram III of a scenario according to an embodiment of this application;
FIG. 15A is a flowchart of another system resource scheduling method according to an embodiment of this application;
FIG. 15B(1), FIG. 15B(2), and FIG. 15B(3) are a schematic diagram IV of a scenario according to an embodiment of this application;
FIG. 16 is a flowchart of still another system resource scheduling method according to an embodiment of this application;
(a) and (b) of FIG. 17 are a schematic diagram V of a scenario according to an embodiment of this application;
FIG. 18 is a flowchart of yet another system resource scheduling method according to an embodiment of this application;
(a), (b), and (c) of FIG. 19 are a schematic diagram VI of a scenario according to an embodiment of this application; and
FIG. 20 is a schematic diagram of an electronic device according to an embodiment of this application.

### DESCRIPTION OF EMBODIMENTS

To enable a person skilled in the art to understand the solution of this application more clearly, an application scenario of the technical solution of this application is described below first.

Currently, to ensure sufficient system resources of an APP running in the foreground, a freeze control technology of managing and controlling an APP running in the background to increase a response speed of the foreground is used in the related art. When an APP is started in the foreground, a background application is frozen within a preset time length, to reduce occupation of system resources of the background application, and ensure sufficient system resources of the foreground APP. However, the preset time length set through the current freeze control technology remains constant, causing poor flexibility, reasonableness, and an effect of freeze control, sometimes even causing a decrease in a response speed of the foreground, and degrading user experience. Details are described below.

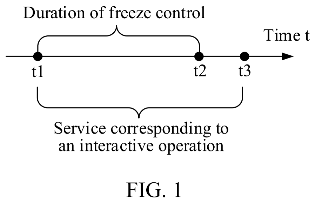

Refer to FIG. 1. FIG. 1 is a principle diagram I of a freeze control scheme in the related art.

An interactive operation performed by a user for a display interface of an electronic device, that is, an interactive operation performed by a user on the display interface of the electronic device, includes an operation performed on a foreground application and includes an operation performed by the user on a system desktop. The interactive operation includes, for example, startup, exiting, side swiping, tapping, pop-up window processing, and swiping in Moments in an instant messaging APP, tapping to open a mini program in the instant messaging APP, and tapping pay in a shopping APP to jump to a payment APP, and further includes operations such as opening an APP on a desktop by a user, switching an APP through a background application display interface by the user, and triggering a dynamic effect on the desktop by the user. The operation of triggering the dynamic effect on the desktop may include an operation of triggering a desktop animation effect such as switching a desktop window or pulling down a status bar by the user.

In the related art, a freezing time of a background APP is set to a preset time, and a length of the preset time is t1-t2.

When a user performs an operation in the foreground, due to diversity of interactive operations on a display interface, it is difficult to ensure that a time for a service corresponding to the interactive operation on the display interface is exactly equal to the preset time. When the time for the service corresponding to the interactive operation on the display interface is greater than the preset time, for example, the time corresponding to the interactive operation on the display interface is t1-t3, where t3 is greater than t2.

In this case, the background APP is frozen within a time period of t1-t2, that is, system resources of the background APP are reclaimed within the time period of t1-t2, and a system resource allocated to the service corresponding to the interactive operation is increased.

However, the background APP is unfrozen within a time period of t2-t3, and the background APP recovers occupation of the system resource, so that the system resource allocated to a service corresponding to the foreground interactive operation is less than a system resource allocated to a service corresponding to the foreground interactive operation within t1-t2. In other words, within the time period of t2-t3, a response time of the service corresponding to the interactive operation is not shortened by increasing the system resource, resulting in a poor effect of increasing a foreground response speed, and therefore a poor effect of the freeze control.

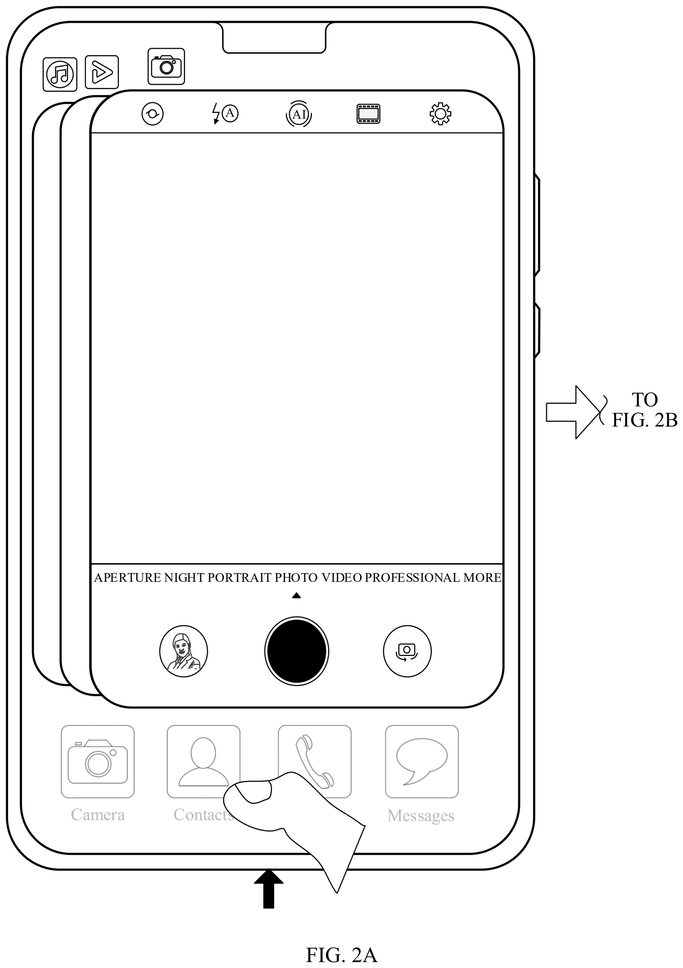

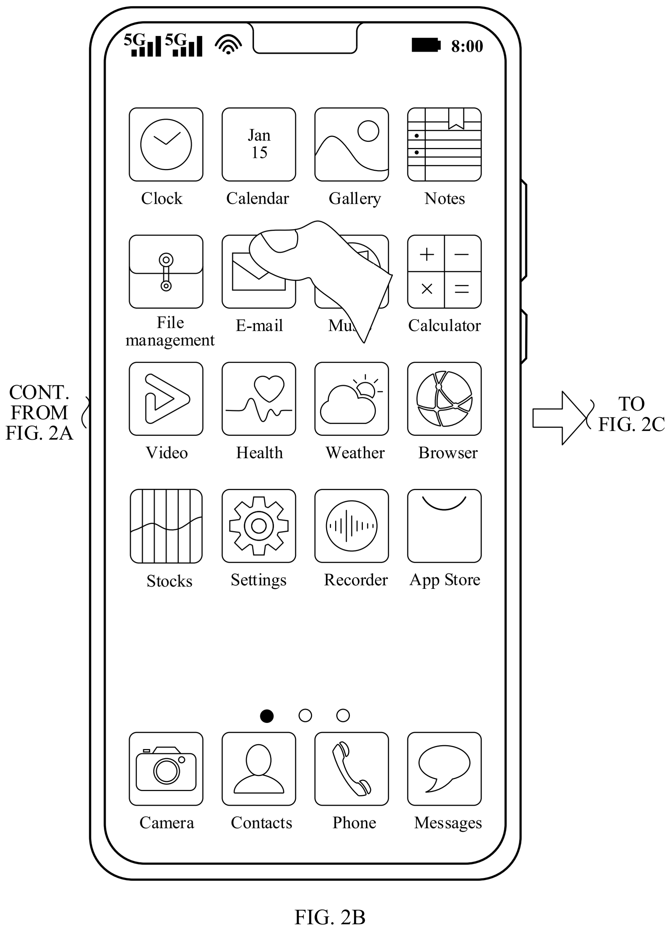

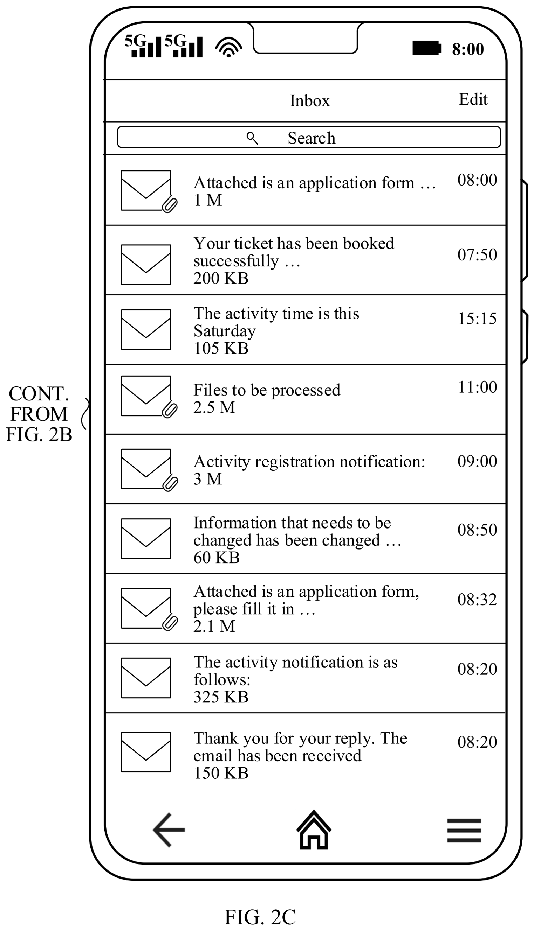

Refer to FIG. 2A, FIG. 2B, and FIG. 2C. FIG. 2A, FIG. 2B, and FIG. 2C are a schematic diagram I of a scenario according to this application.

FIG. 2A shows a schematic diagram of a background program interface when APPs such as camera, video, and music are running in a background of an electronic device. A user implements a return operation by swiping up a bottom center of a screen, returns to a desktop home page shown in FIG. 2B, and selects and opens an email APP on the desktop. FIG. 2C shows a schematic diagram of an interface upon completion of loading of a first frame of content after the email APP is opened. In this case, a time of a service corresponding to the interactive operation may be a time for switching from FIG. 2B to FIG. 2C.

When a user taps to open the email APP, the electronic device can shorten the time for switching from FIG. 2B to FIG. 2C through freeze control on the background APP. However, as described in FIG. 1, because the preset time is relatively short, freeze control for the background APP is ended before loading of a first frame of a page in FIG. 2C is completed, so that a system resource allocated for loading of FIG. 2C is reduced within a period of time. Therefore, the loading of page FIG. 2C needs a longer time, resulting in a poor effect of freeze control.

The following describes a defect when the preset time of freeze control is excessively long.

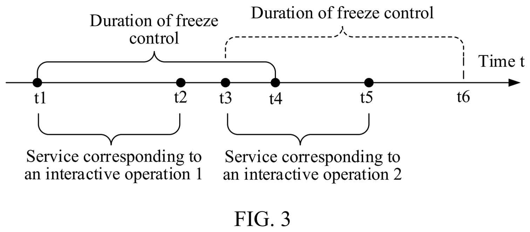

Refer to FIG. 3. FIG. 3 is a principle diagram II of a freeze control scheme in the related art.

In this case, in the related art, a freezing time of a background APP is set to a preset time, and a length of the preset time is t1-t4.

When a user performs an interactive operation 1 in the foreground, a time for a service corresponding to the interactive operation 1 is t1-t2, and t4 is greater than t2. In this case, after the service corresponding to the interactive operation 1 is ended, freeze control on the background APP is not ended, and the background APP is still in a frozen state. In this case, if the user performs an interactive operation 2 at a moment t3 before t4, when the electronic device freezes the background APP to increase a response speed of the service corresponding to the interactive operation 2, theoretically in this case, the freezing time of the background APP is t3-t6 that correspond to a dashed line. However, actually because the background APP is in a frozen state at this moment, the freeze control of the electronic device for the background APP fails at this time. As a result, after the moment t4 is reached, the background APP is unfrozen, and the response time of the service corresponding to the interactive operation 2 is not increased by increasing system resources within the time period of t4-t5. Therefore, the effect of freeze control is poor.

In a possible scenario, if the APP opened through the interactive operation 2 is an APP that is frozen due to the interactive operation 1, because the APP is frozen during t3-t4, the foreground response speed may be reduced or even stuttering may be caused, degrading user experience. A description is provided through an example below.

Still referring to FIG. 2A, FIG. 2B, and FIG. 2C, a user implements a return operation by swiping up the bottom center of the screen, triggering an animation effect of returning to the desktop home page shown in FIG. 2B. To ensure a response speed of the operation of returning to the desktop and smoothness of the animation effect, the electronic device freezes the background APP in FIG. 2A to increase system resources allocated to a dynamic effect on the desktop. The email APP does not run in the background, but the user quickly taps the desktop home page shown in FIG. 2B to open the email APP. In this case, freeze control of the background APP is not ended, and a conflict of strategy occurs, causing freeze control performed to increase the response speed of opening the email APP to fail. As a result, the response speed of opening the email APP at this time is not effectively increased. Therefore, the effect of freeze control is poor.

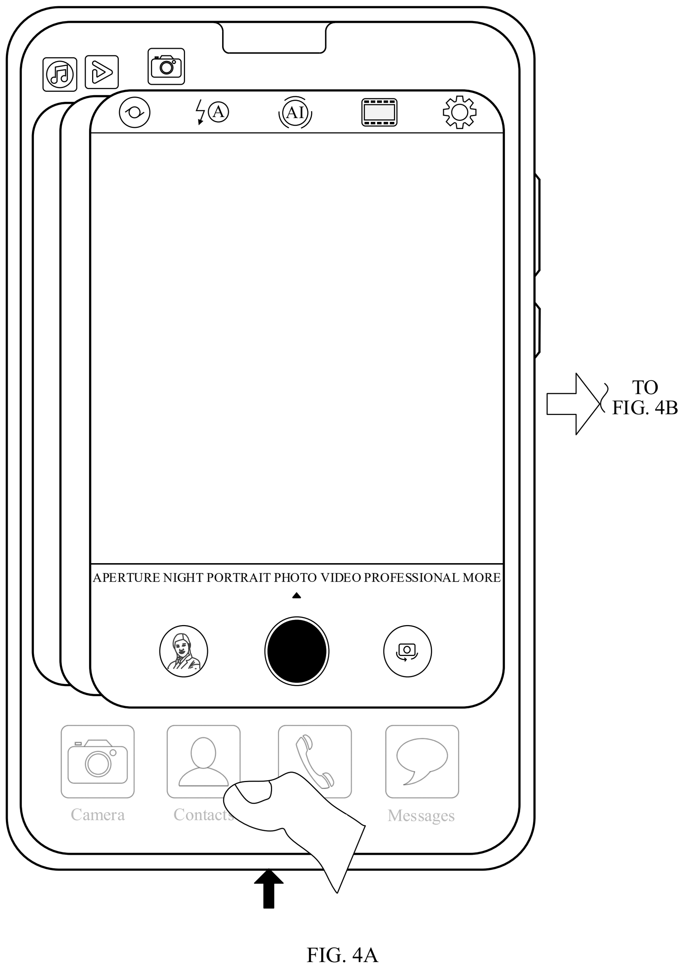

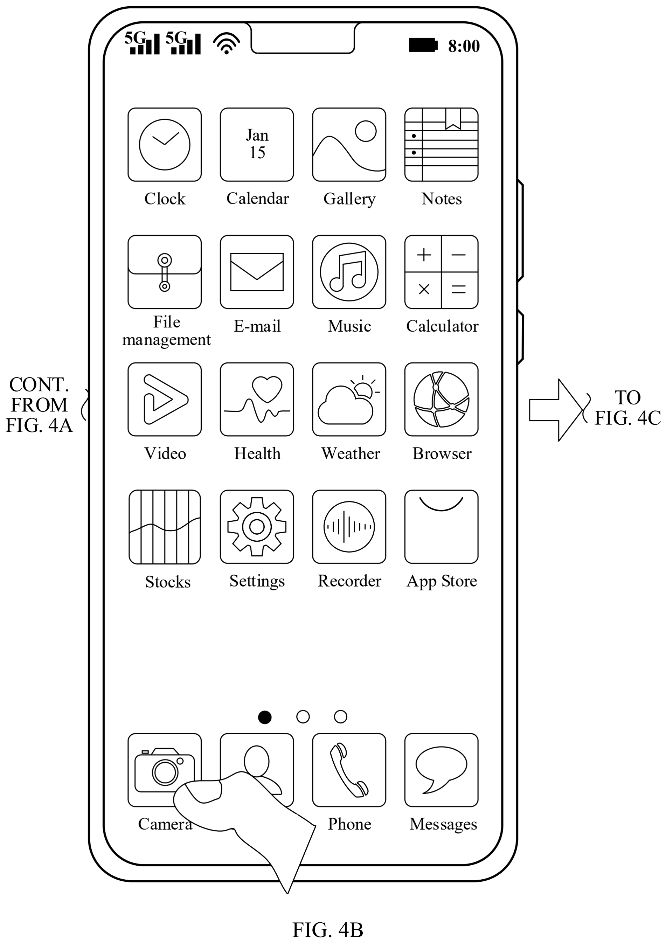

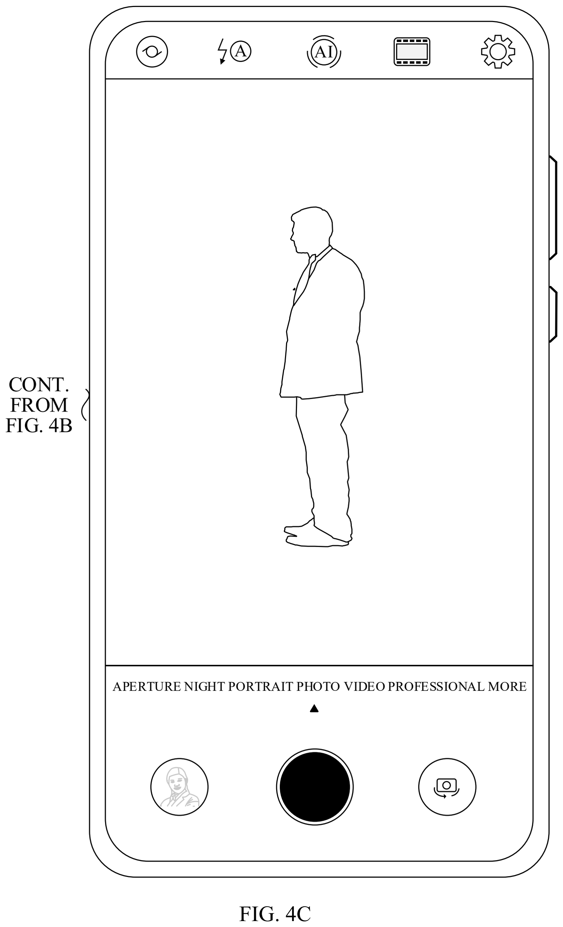

Refer to FIG. 4A, FIG. 4B, and FIG. 4C. FIG. 4A, FIG. 4B, and FIG. 4C are a schematic diagram II of a scenario according to this application.

FIG. 4A shows a schematic diagram of an interface when APPs such as camera, video, and music are running in a background of an electronic device. A user implements a return operation by swiping up a bottom center of a screen, returns to a desktop home page shown in FIG. 4B, and selects and opens a camera on the desktop. FIG. 4C shows a schematic diagram of an interface after the camera is opened and loading of preview is completed. In this case, a time for a service corresponding to the interactive operation of opening the camera may be a time for switching from FIG. 4B to FIG. 4C.

The user implements a return operation by swiping up the bottom center of the screen, and returns to the desktop home page shown in FIG. 4B. To ensure the response speed of the operation of returning to the desktop and ensure smoothness of the animation effect of returning to the desktop, the electronic device increases the system resource allocated to improve the desktop animation effect, and freezes the background APP in FIG. 4A. In this case, the camera is also frozen in the background. The user quickly taps the desktop home page shown in FIG. 4B to open the camera. In this case, freeze control of the camera is not ended, and a conflict of strategy occurs, which may cause the foreground response speed to be reduced or even cause stuttering, degrading user experience.

To resolve the foregoing technical problem, this application provides a system resource scheduling method, an electronic device, and a storage medium. Freeze control of a background APP is no longer performed based on a fixed preset time, but freezing is performed as required based on a coverage duration of a service corresponding to an interactive operation on a display interface. In other words, when the service corresponding to the interactive operation on the display interface starts, the background APP starts to be frozen, and when the service corresponding to the interactive operation on the display interface ends, the background APP is unfrozen, thereby improving flexibility, reasonableness, and an effect of the freeze control. A conflict in a freezing strategy does not occur, effectively increasing a foreground response speed and enhancing user experience.

To enable a person skilled in the art to understand the solution of this application more clearly, technical solutions in embodiments of this application are described below with reference to the accompanying drawings in embodiments of this application.

The following terms "first" and "second" are merely used for description, and cannot be construed as indicating or implying relative importance or implicitly indicating a quantity of indicated technical features. Therefore, a feature defined by "first" or "second" may explicitly or implicitly includes one or more features. In the description of embodiments, unless otherwise stated, "a plurality of" means two or more.

The electronic device in embodiments of this application may be a mobile phone, a tablet computer, a personal digital assistant (personal digital assistant, PDA), an on-board terminal device, or the like. No special limitation is imposed on a specific form of the electronic device in embodiments of this application. An example in which the electronic device is a mobile phone is used in the following description.

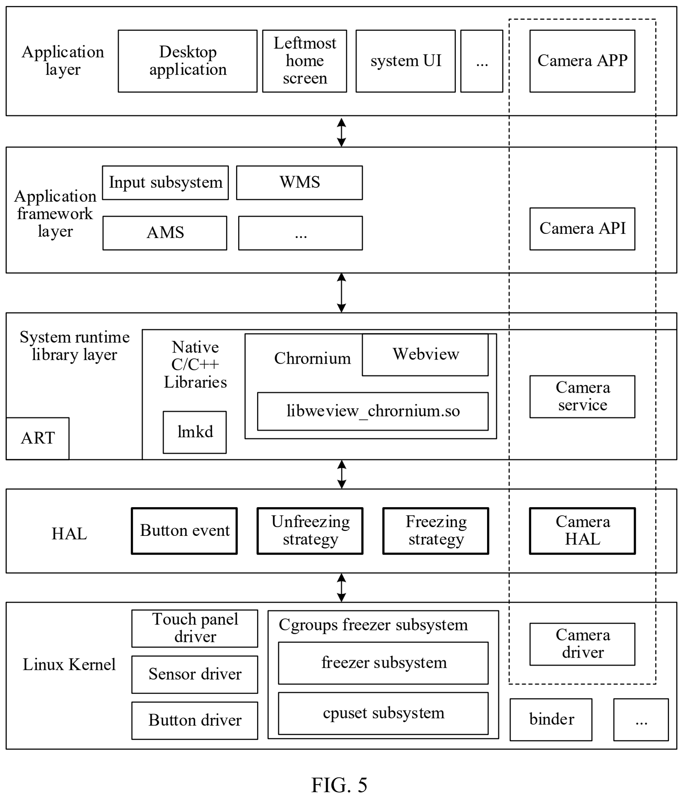

Refer to FIG. 5. FIG. 5 is an architecture diagram of a software system of an electronic device according to this application.

A software system of the electronic device may use a layered architecture, an event-driven architecture, a microkernel architecture, a microservice architecture, or a cloud architecture. In this embodiment of this application, the software structure of the electronic device is described through examples by using an Android system with a layered architecture as an example.

In the layered architecture, software is divided into several layers, and each layer has a clear role and division of labor. The layers communicate with each other through a software interface. In some embodiments, the Android system includes an application layer, an application framework layer (Framework), a system runtime library layer, a hardware abstraction layer (Hardware Abstraction Layer, HAL), and a kernel layer (Linux Kernel) from top to bottom.

The application layer may include a series of application packages. The built-in system applications and non-system-level applications belong to the application layer, responsible for direct interaction with a user. The application layer may include applications such as a camera APP, gallery, calendar, phone, maps, navigation, WLAN, Bluetooth, music, videos, and messages. The applications may further include applications of a system such as a desktop or a leftmost home screen.

The leftmost home screen, that is, a page added to the leftmost side of the desktop, is referred to as an intelligent assistant. As a smartphone can perform increasingly more abundant tasks, some information and applications often need to be used at any time. The leftmost home screen may integrate all these functions and information together, making them more convenient and quick to use.

A system user interface (system user interface, system UI) is one of core applications of a system, responsible for feeding back system and application states and maintaining a large amount of interaction with the user. A system UI is used as a base class, and a subclass of the system UI implements different system interfaces. A main view structure of the system UI includes a leftmost home screen, a wallpaper of a locked screen (wallpaper), a status bar (Status Bar), a lock screen interface (Keyguard), and a lock screen password interface (Bouncer). The status bar (Status Bar) is configured to display status information of a system. The lock screen interface is configured to process functions such as screen locking, unlocking, and displaying a notification under a lock screen.

The application framework layer provides an application programming interface (application programming interface, API) and a programming framework for applications at the application layer. The application framework layer includes some predefined functions. This layer is usually written in Java code, and may be referred to as a Java Framework.

The application framework layer may include but is not limited to the following services and components.

Window manager service (Window Manager Service, WMS): It is mainly responsible for managing window views on an Android device, and controlling an interface of an application and correct display and input. The WMS is responsible for managing a location, a size, and a layout of an application window, and in charge of a multitasking operation and switching between applications, to ensure that a user interface is stable, smooth, and consistent. The window manager may further obtain a size of a display screen, determine whether there is a status bar, perform screen locking, take a screenshot of the screen, and the like.

Activity manager service (Activity Manager Service, AMS) is a key component in an Android system, and is responsible for managing a life cycle of an application, and interaction between a task stack and the application.

Input (Input) subsystem: It is a system configured to process an input event, and supports a plurality of input sources, such as a touch panel and buttons. The Input subsystem sends an input event to an event queue of an application, and remaps an input event that needs to be remapped, so that the application can correctly process the input events.

Location manager (Location Manager): It provides a geographical location and positioning function services.

Package manager (Package Manager): It manages all applications installed in an Android system.

Notification manager (Notification Manager): It enables an application to display notification information in the status bar that may be used to convey a message of a notification type, where the message may disappear automatically after a short stay without user interaction. For example, the notification manager is configured to provide a notification of download completion, a message notification, and the like. The notification manager may further be a notification that appears on a top status bar of a system in a form of a graph or a scroll bar text, for example, a notification of an application that runs on a background, or may be a notification that appears on a screen in a form of a dialog window. For example, text information is prompted on a status bar, a prompt tone is made, the electronic device vibrates, or an indicator light flashes.

Resource manager (Resource Manager): It provides non-code resources used by an application, for example, a localized character string, a picture, a layout file, a color file, and a video file.

Telephone manager (Telephony Manager): It manages mobile device functions, and provides a communication function of an electronic device, for example, management of a call status (including connected, hang-up, or the like).

Content provider (Content Provider): It is configured to store and obtain data and enable the data to be accessible by an application, so that data may be shared between different applications. The data may include a video, an image, audio, calls that are made and answered, a browsing history, a bookmark, a phonebook, and the like.

View system (View System): It includes visual controls such as a control for displaying a text and a control for display a picture. The view system may be configured to construct an application. A display interface may include one or more views. For example, a display interface including a short message notification icon may include a view for displaying a text and a view for displaying a picture.

The system runtime library layer mainly includes an Android runtime library and a program library (Native C/C++ Libraries).

The Native C/C++ Libraries may include a plurality of functional modules, for example, a surface 1 manager (surface manager), a media library (Media Libraries), a three-dimensional graphics processing library (for example, OpenGL ES), and a 2D graphics engine (for example, SGL).

A low memory killer daemon (low memory killer daemon, lmkd) of a system runtime library layer can monitor a status of a running Android system memory, and deals with a problem of relatively high memory pressure by stopping a most unnecessary process, so that the system runs at an acceptable level.

Webview of the system runtime library layer is a webkit-based engine, and may parse a document object model (document object model, dom) element, and present a control of a hypertext markup language (Hyper Text Markup Language, HTML) page, and is a visual component and used as a visual part of a native APP.

The Android runtime library includes: a core library and an Android runtime (Android Runtime, ART). The ART is responsible for scheduling and management of an Android system, and is a running environment on an Android operating system. In an ART environment, when an application is installed for the first time, byte code is compiled into machine code in advance, making the application become a real local application.

The core library includes two parts: one part is a performance function that the Java language needs to call, and the other part is a core library of Android.

A hardware abstraction layer (Hardware Abstraction Layer, HAL) is a routine package of a software layer, and is an interface layer located between an operating system kernel and a hardware circuit, aiming to abstract a hardware, and configured to simulate details of a specific system platform, so that a program may directly access a hardware resource.

The kernel layer (Linux Kernel) is a layer between hardware and software. The kernel layer includes at least a touch panel (touch panel, TP) driver, a camera driver, an audio driver, a sensor driver, a button driver, a binder, and a control group (control groups Cgroups) subsystem.

Cgroups is a physical resource isolation mechanism provided by a Linux kernel. Through this mechanism, resource limitation, isolation, and statistics functions for a Linux process or a process group may be implemented. The Cgroups subsystem defines a subsystem for each controllable resource. A typical subsystem is as follows.

Freezer (freezer) subsystem: It is configured to suspend and recover a process in a Cgroup. In this embodiment of this application, a freezing operation on the background APP is implemented based on the freezer subsystem.

Cpuset subsystem: It may allocate a separate CPU node or memory node for a process in Cgroups.

The cpu subsystem mainly limits a CPU utilization rate of a process.

Each subsystem of the Cgroups needs to cooperate with another subsystem of the kernel to complete resource control. For example, a limitation for a CPU resource may be completed based on configurations of the cpu subsystem, the cpuset subsystem, and the freezer subsystem through a process scheduling module.

The system resource in this embodiment of this application includes, but is not limited to, a central processing unit CPU resource, a network bandwidth resource, an input/output (input/output, I/O) channel resource, or a framework layer Framework system resource.

In this embodiment of this application, applications running in the background may be classified into two types. One type is an application that may be controlled by freezing, and the other type is an application that cannot be controlled by freezing. The application that cannot be controlled by freezing may be, for example, a special program set in a system, such as an instant messaging APP, and may be further an application related to the System Server. The background applications controlled by freezing recorded in the following descriptions of embodiments of this application all refer to applications on which a system may perform freeze control, and do not include applications on which freeze control cannot be performed. Details are not described in the following descriptions.

An embodiment of this application provides a system resource scheduling method. A detailed description is provided below with reference to the accompanying drawings.

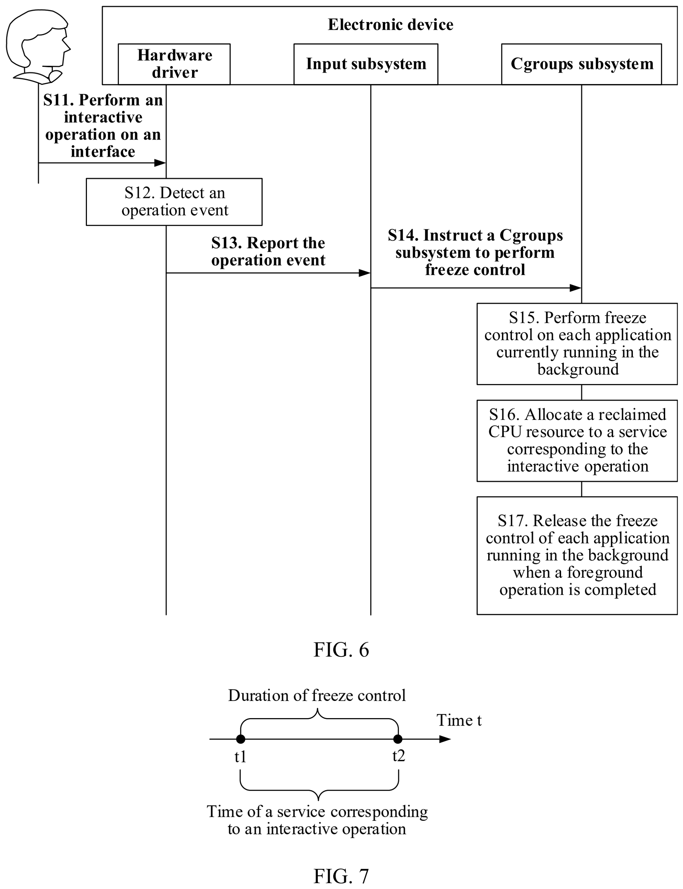

Refer to FIG. 6. FIG. 6 is a flowchart of a system resource scheduling method according to an embodiment of this application.

The method includes the following steps.

S11: A user performs an interactive operation on an interface.

In this embodiment of this application, an interactive operation on a display interface is triggered by the user, and the interactive operation on the display interface is an interactive operation performed by the user on a system interface. The interactive operation on the display interface includes but is not limited to:
opening an APP on a desktop, switching an APP through a background application display interface, closing a background APP through a background application display interface, triggering an animation effect on a desktop, and triggering an animation effect on an APP interface.

A manner of triggering the animation effect on the desktop includes but is not limited to:
switching a desktop window, for example, switching the desktop window from a home page of the desktop to a leftmost home screen, switching the desktop window from the leftmost home screen to the home page, and performing switching or transition between adjacent pages of the desktop window;
status bar pull-down display;
dragging and adjusting a location of an APP or a desktop card; and
triggering an animation effect of a desktop background by changing a horizontal state of the electronic device.

An animation effect triggered on an APP interface includes: switching of windows on an APP interface through a gesture, a virtual button, or a physical button; and performing a transition in an APP.

In this embodiment of this application, if any of the following conditions is satisfied, it is regarded that the APP is in the foreground:
having a visible activity, and having a foreground service. Another foreground APP is already associated with the APP, for example, another application is bound to a service of the APP.

If none of the foregoing conditions is satisfied, it is regarded that the APP is in the background. The APP in the background may be viewed on the background application display interface. For the background application interface, reference may be made to FIG. 4A.

When a user triggers the interactive operation on the display interface, the solution of this application is intended to reclaim a system resource by freezing a background APP, thereby increasing the system resource allocated to a service corresponding to the interactive operation on the display interface, and increasing a response speed of the service corresponding to the interactive operation on the display interface.

S12: A hardware driver detects an operation event.

The hardware driver of the electronic device is located in a kernel layer (Linux Kernel), and is configured to detect the operation event. For example, the hardware driver includes a touch panel driver for detecting an operation related to a touch panel, a button driver for detecting a button-related operation, and a sensor driver for detecting a sensor-related operation.

S13: The hardware driver reports the operation event to an Input subsystem.

For example, the electronic device includes a touch sensor and a touch panel. After the touch sensor receives a touch operation or a tapping operation, a corresponding hardware interrupt is sent to the touch panel driver of the kernel layer. The kernel layer processes the touch operation into an original input event (including information such as touch coordinates and a time stamp of the touch operation). The original input event is stored in the kernel layer. The original input event is reported to the Input subsystem of an application framework layer, and the Input subsystem identifies a control corresponding to the input event. An example in which the touch operation is a touch single-tap operation, and the control corresponding to the single-tap operation is a control of a camera application icon is used. A camera application invokes an interface of the application framework layer to start the camera application, then starts a camera driver by invoking the kernel layer, and captures a static image or a video through the camera.

For another example, the electronic device includes buttons, and a quantity and locations of the buttons are not limited in this application. The button may be a mechanical button, or may be a touch button. When the button is pressed by the user, the button driver of the kernel layer processes a button operation into an original input event (which may include information such as the function of the button, and a time stamp of the button operation). The original input event is stored in the kernel layer. The original input event is reported to the Input subsystem of an application framework layer, and the Input subsystem identifies a control corresponding to the input event.

For another example, the electronic device includes an acceleration sensor that may detect a magnitude of an acceleration of the electronic device in each direction (generally three axes). When the electronic device is stationary, a magnitude and a direction of gravity may be detected. The sensor may be further configured to identify a posture of the electronic device, for example, a horizontal posture or an inclined state. When the user changes the inclined posture of the electronic device, a speed sensor obtains corresponding detection data, and the kernel layer processes the detection data into the original input event. The original input event is stored in the kernel layer. The original input event is reported to the Input subsystem of an application framework layer, the Input subsystem identifies a control corresponding to the Input event, and informs a system UI, and the system UI controls an animation effect of a desktop background.

S14: The Input subsystem instructs a Cgroups subsystem to perform freeze control.

The Input subsystem notifies the Cgroups subsystem that freeze control needs to be performed on an APP that may be frozen in the background in this case.

The freeze control is used to reclaim the system resource allocated to each application.

S15: The Cgroups subsystem performs freeze control on each application currently running in the background.

A freezer subsystem of the Cgroups subsystem is configured to implement the freeze control performed on each application.

S16: The Cgroups subsystem allocates the reclaimed system resource to a service corresponding to the interactive operation.

A cpuset subsystem and a cpu subsystem in the Cgroups subsystem cooperate to increase CPU usage of the service corresponding to the interactive operation, and allocate the reclaimed system resource to the service corresponding to the interactive operation.

It may be understood that the Cgroups subsystem allocates all or some of the reclaimed system resources to the service corresponding to the interactive operation.

S17: When a foreground operation is completed, the Cgroups subsystem releases the freeze control of each application running in the background.

When the foreground operation is completed, acceleration for the foreground operation also ends correspondingly. In this case, the Cgroups subsystem releases the freeze control of each application running in the background, that is, unfreezes the application running in the background in time.

In a possible implementation, after unfreezing the background application, the Cgroups subsystem may reallocate a system resource to each application running in the background. The additional system resources previously allocated to the service corresponding to the interactive operation on the display interface may be reclaimed and reallocated to the applications running in the background, so that the system resource of the service corresponding to the interactive operation on the display interface is restored to a state before the increase.

In another possible implementation, after unfreezing the background applications, the Cgroups subsystem may reclaim the additional system resources previously allocated to the service corresponding to the interactive operation on the display interface, and restore the system resources of the background applications based on usage of the system resources of the background applications before the freeze control.

Through the technical solution provided in this application, the freeze control of the background APP is no longer performed based on a fixed preset time, but freezing is performed as required based on the coverage duration of the service corresponding to the interactive operation on the display interface.

In the foregoing embodiments, an implementation in which the Input subsystem instructs the Cgroups subsystem to perform freeze control is described. In another possible implementation, when the interactive operation on the display interface is an interactive operation triggered by the user on the desktop, after the hardware driver of the electronic device reports an operation event corresponding to the interactive operation on the display interface to an input Input subsystem of the electronic device, the Input subsystem reports the operation event to a desktop application, and performs instrumentation control in a desktop stage, that is, an instrumentation point is preset on each of critical paths of various services corresponding to the desktop application. When the instrumentation point is executed, it may be determined that a service corresponding to the instrumentation point is activated. In this case, the desktop application implements identification of the operation event, that is, identifies a corresponding service start through the critical path of a service corresponding to the instrumentation point. In this case, the desktop application determines, based on the identification result of the operation event, that freeze control needs to be performed, instructs the Cgroups freezer subsystem of the electronic device to perform freeze control on all or some of the applications running in the background, and allocates a system resource to a correspondingly started service.

Compared with the implementation in which the Input subsystem instructs the Cgroups subsystem to perform freeze control, this implementation can implement the identification operation in the desktop phase, and can differentiate between operation types based on a service critical path.

In still another possible implementation, for each application, an instrumentation point may be set in a critical path of a service of the application. It is detected that the instrumentation point is located in a service path of each foreground operation in the framework layer Framework. When the service path is accessed, the instrumentation point is executed, so as to implement detection. An instrumentation technology refers to inserting a probe into an original program while ensuring logical integrity of the program, and collecting a running condition of the original code through the probe.

The critical path of the service may include, but is not limited to, a startup service path of an application, a transition service path of an application, and the like. The interactive operation on the display interface includes two mainstream granularity processing manners. One is that when an activity change exists in a system, and this type of scenario is controlled based on an activity (if an animation effect exists at this point, an activity strategy is preferred). Another is that no activity conversion exists, but a system animation effect exists. This type of scenario is controlled based on the system animation effect. However, the two cases may cause the instrumentation point set in the critical path of the service to be executed. In this case, the application may determine that the user triggers the foreground operation. In this case, the application may instruct the Cgroups freezer subsystem of the electronic device to perform freeze control on all or some of the applications running in the background. In addition, instrumentation is also performed on an end point of each service path. When the instrumentation is performed, it may be determined that the service corresponding to the foreground operation is ended at this point, and the Cgroups freezer subsystem is instructed to release the freeze control.

Through the foregoing implementation, freeze control can be performed when a service path of an application is executed, and unfreezing is performed after the service path is executed. In other words, application-level detection is implemented. Refer to FIG. 7. FIG. 7 is a schematic diagram I of a principle according to an embodiment of this application.

In this solution of this application, a background APP is frozen based on a time of a service corresponding to the interactive operation, so that when the service corresponding to the interactive operation starts, the background APP starts to be frozen for control, and when the service corresponding to the interactive operation ends, the background APP is unfrozen. In other words, the time when the interactive operation starts and the time when the background APP starts to be frozen are both t1, and the time when the service corresponding to the interactive operation ends and the time when the background APP is unfrozen are both t2.

In this case, the problem of a poor effect of freeze control that exists in descriptions corresponding to FIG. 1, FIG. 2A, FIG. 2B, and FIG. 2C does not exist. In the solution of this application, the background APPs are frozen within the entire coverage duration of the service corresponding to the interactive operation, and the system resource allocated to the service corresponding to the interactive operation is increased, thereby effectively increasing a response time of the service corresponding to the interactive operation.

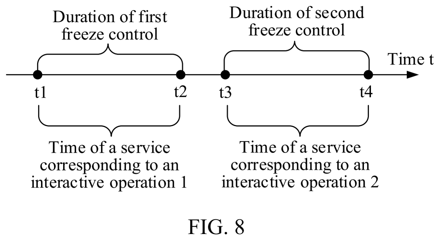

Refer to FIG. 8. FIG. 8 is a schematic diagram II of a principle according to an embodiment of this application.

When a user performs an interactive operation 1 in the foreground, a coverage duration of a service corresponding to the interactive operation 1 and a duration for first freeze control are both t1-t2. When the user continues to perform an interactive operation 2 in the foreground, a coverage duration of a service corresponding to the interactive operation 2 and a duration for second freeze control are both t3-t4. Even if t3 and t2 are very close in time, in this case, the second freeze control performed on the background APP to increase a response speed of the interactive operation 2 does not have a strategy conflict with the previous first freeze control, and the problems in the foregoing corresponding descriptions of FIG. 3, FIG. 4A, FIG. 4B, and FIG. 4C do not exist.

Based on the above, through the technical solution provided in embodiments of this application, the freeze control for the background APP is no longer performed based on a fixed preset time, but freezing is performed as required based on a coverage duration of a service corresponding to the interactive operation, thereby improving flexibility, reasonableness, and an effect of the freeze control. No conflict occurs in a freezing strategy under a high-frequency multi-operation sequence, thereby effectively increasing a foreground response speed and enhancing user experience. In addition, in view of varying capabilities of chips used in the electronic device, in the solution of this application, engineering experiment adjustment based on a product or chip granularity does not need to be performed, which is highly practical.

A description is provided below with reference to specific scenarios and implementations. For ease of description, in the following description, an interactive operation on a display interface of an electronic device triggered by a user is referred to as a foreground operation for short.

A description is provided below first by using an example in which a mail APP on a desktop is opened.

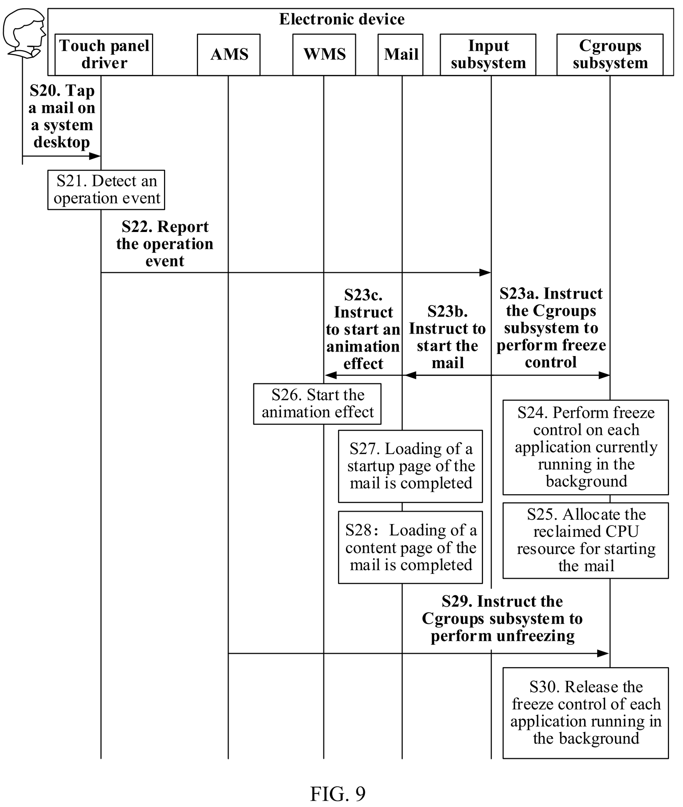

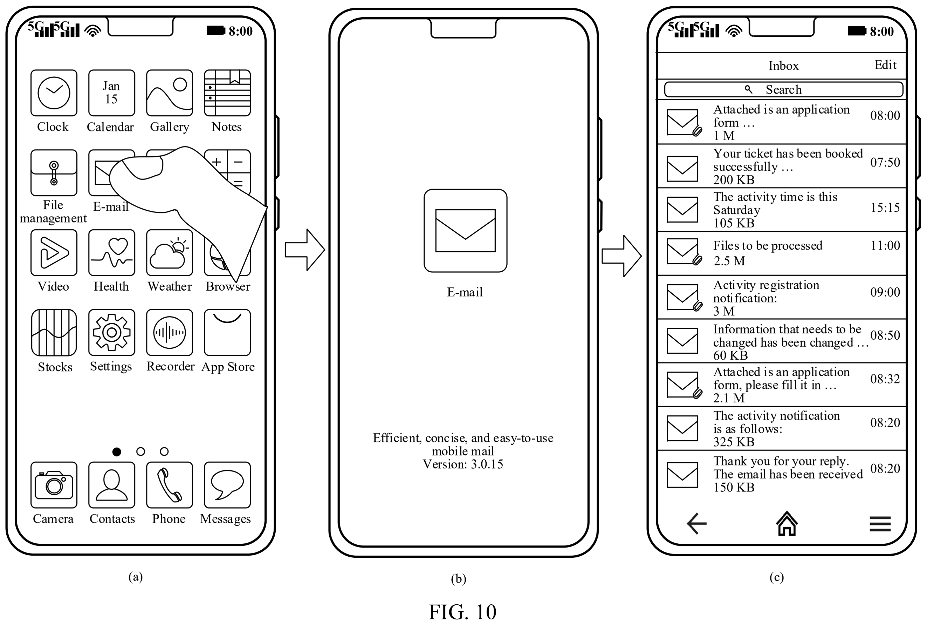

Refer to FIG. 9 and (a), (b), and (c) of FIG. 10 together. FIG. 9 is a flowchart of another system resource scheduling method according to an embodiment of this application. (a), (b), and (c) of FIG. 10 are a schematic diagram I of a scenario according to an embodiment of this application.

S20: A user taps a mail on a system desktop.

In this embodiment of this application, an example in which the user opens the mail APP in the foreground for the first time is used. In other words, the mail APP has not been opened before and is not in a state of running in the background.

S21: A touch panel driver detects an operation event.

The electronic device includes a touch sensor and a touch panel. After the touch sensor receives a tapping operation performed by the user, a corresponding hardware interrupt is sent to the touch panel driver of a kernel layer. The touch panel driver of the kernel layer processes a touch operation into an original input event (including information such as tapping coordinates and a time stamp of the tapping operation).

S22: The touch panel driver reports the operation event to an Input subsystem.

The original input event is reported to the Input subsystem of an application framework layer, and the Input subsystem identifies a tapping operation on the mail performed by the user corresponding to the input event.

S23a: The Input subsystem instructs a Cgroups subsystem to perform freeze control.

The Input subsystem notifies the Cgroups subsystem that freeze control needs to be performed on the background APP at this point, so as to reclaim and allocate system resources of the background APP to a foreground operation, thereby accelerating completion of a start of the mail.

The freeze control is used to reclaim the system resource allocated to each application.

S23b: The Input subsystem instructs the mail to start.

S23c: The Input subsystem instructs a Window Manager Service to start an animation effect.

The Window Manager Service switches a page from a desktop to a program window of the mail based on a set location, size, and layout of a mail program window, and starts an animation effect of transition.

S24: The Cgroups subsystem performs freeze control on each application currently running in the background.

A freezer subsystem of the Cgroups subsystem is configured to implement the freeze control performed on each application.

S25: The Cgroups subsystem allocates the reclaimed system resource for starting the mail.

A cpuset subsystem and a cpu subsystem in the Cgroups subsystem cooperate to increase CPU usage of the foreground operation and allocate the reclaimed system resource to the mail application.

S26: The Window Manager Service starts the animation effect.

Refer to (a), (b), and (c) of FIG. 10. (a) of FIG. 10 is a schematic diagram showing that a user taps a mail icon on a desktop to open a mail APP; (b) is a schematic diagram showing a main interface of the mail after the mail icon is tapped; and (c) is a schematic diagram showing an interface after loading of first frame content is completed after the mail is opened.

It may be understood that the main interface and the interface after loading of the first frame content is completed shown in (a), (b), and (c) of FIG. 10 are merely illustrative, and do not constitute a limitation on the technical solution of this application.

In a possible implementation, a time of the foreground operation may be from a time when the Input subsystem of the electronic device receives reporting of an operation event after tapping in (a) until the loading of the first frame content is completed in (c).

S27: Loading of a first frame of the main interface of the mail is completed.

In this case, the interface of the electronic device is shown in (b). After the loading of the first frame of the main interface of the mail is completed, the main interface may be displayed on the desktop.

S28: Loading of the first frame content of the mail is completed.

In this case, the interface of the electronic device is shown in (c). The loading of the first frame content of the mail is completed, that is, loading of a first frame of a content page is completed, and the content page may be displayed on the desktop.

S29: The Cgroups subsystem is instructed to perform unfreezing.

After the mail is started, an AMS instructs the Cgroups subsystem to unfreeze the background APP, so that the background APP may obtain a system resource.

In a possible implementation, instrumentation is also performed on an end point of a startup service path of the mail APP in an application framework layer. When the instrumentation is performed, it may be determined that starting of a corresponding foreground operation is ended at this point. The monitoring may be implemented through the AMS, and the Cgroups freezer subsystem is instructed to release the freeze control.

S30: The Cgroups subsystem releases freeze control of each application running in the background.

When determining that the foreground operation is completed, the Cgroups subsystem unfreezes each application running in the background.

In a possible implementation, after unfreezing the background application, the Cgroups subsystem reclaims previously allocated additional system resources from the foreground operation, and reallocates the system resource to each application running in the background.

In another possible implementation, the previously allocated additional system resources are reclaimed from the foreground operation and allocated to applications running in the background, so that each application running in the background restores the system resource before the freeze control.

A cpuset subsystem and a cpu subsystem in the Cgroups subsystem cooperate to increase CPU usage of the background APP and allocate the system resources to the background application.

Based on the above, through the technical solution provided in embodiments of this application, when an application is opened in the foreground, the freeze control for the background APP is no longer performed based on a fixed preset time, but freezing is triggered when an operation event is reported to the Input subsystem, and unfreezing is performed after loading of a first frame of a content page of an APP is completed, thereby improving flexibility, reasonableness, and an effect of the freeze control. When a plurality of applications are opened at a high frequency, a conflict in the freezing strategy does not occur, thereby effectively increasing a foreground response speed and enhancing user experience. In addition, in view of varying capabilities of chips used in the electronic device, in the solution of this application, engineering experiment adjustment based on a product or chip granularity does not need to be performed, which is highly practical.

Further, in the foregoing description, "S28: Loading of the first frame content of the mail is completed" is used as an end moment of the foreground operation. In another implementation, "S27: Loading of the first frame of the main interface of the mail is completed" is used as an end moment of the foreground operation. In this case, after S27, S29 and S30 may be performed. This is because a network connection needs to be performed for some applications. If a network status is not good, a relatively long time is needed to complete loading the first frame content, which may cause a relatively long freezing time of the background application. In this case, the background application may be unfrozen in advance.

The technical solution of this application is described below by using an example in which a leftmost home screen is opened on a desktop.

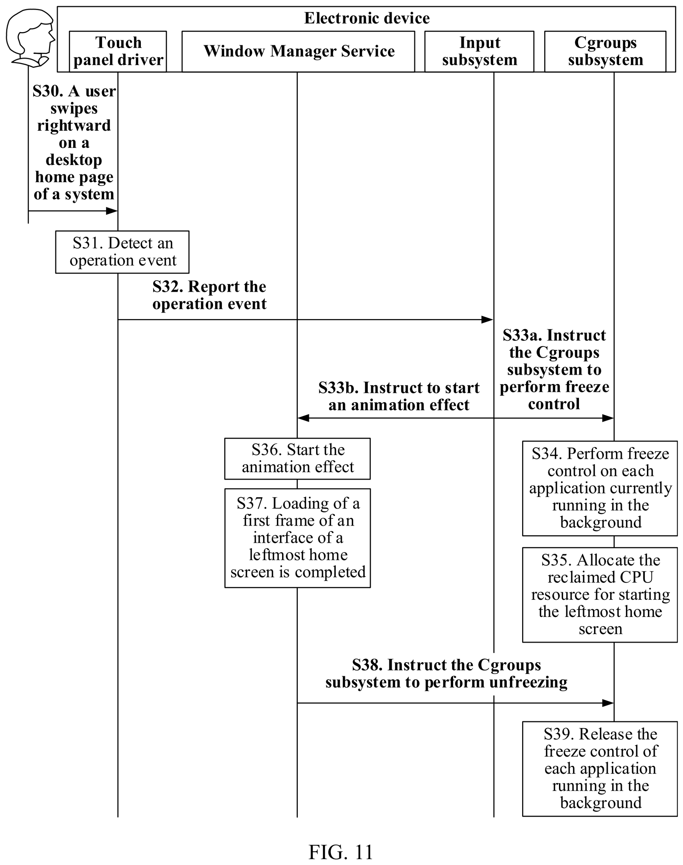

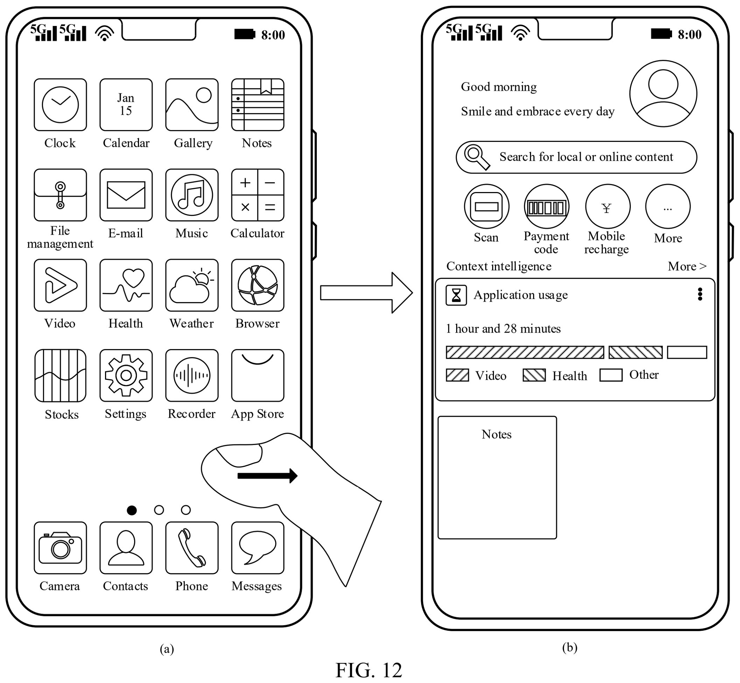

Refer to FIG. 11 and (a) and (b) of FIG. 12 together. FIG. 11 is a flowchart of still another system resource scheduling method according to an embodiment of this application; and (a) and (b) of FIG. 12 are a schematic diagram II of a scenario according to an embodiment of this application.

S30: A user swipes rightward on a desktop home page of a system.

(a) of FIG. 12 shows a schematic diagram when a user swipes rightward on a desktop home page to switch to a leftmost home screen; and (b) shows a schematic diagram of an interface after loading of the leftmost home screen is completed.

It may be understood that the desktop home page and an interface of the leftmost home screen shown in (a) and (b) of FIG. 12 are merely illustrative, and do not constitute a limitation on the technical solution of this application.

S31: A touch panel driver detects an operation event.

After the touch sensor receives a swiping operation performed by the user, a corresponding hardware interrupt is sent to the touch panel driver of a kernel layer. The touch panel driver of the kernel layer processes a touch operation into an original input event.

S32: The touch panel driver reports the operation event to an Input subsystem.

The original input event is reported to the Input subsystem of an application framework layer, and the Input subsystem identifies a swiping operation on a screen performed by the user corresponding to the input event.

S33a: The Input subsystem instructs a Cgroups subsystem to perform freeze control.

The Input subsystem notifies the Cgroups subsystem that freeze control needs to be performed on the background APP at this point, so as to reclaim and allocate the system resources of the background APP to the Window Manager Service to achieve an animation effect and accelerate completion of loading of the leftmost home screen.

S33b: The Input subsystem instructs a Window Manager Service to start an animation effect.

The Window Manager Service switches a window from the home page to the leftmost home screen based on a location, a size, and a layout of the window, and starts an animation effect of transition.

S34: The Cgroups subsystem performs freeze control on each application currently running in the background.

A freezer subsystem of the Cgroups subsystem is configured to implement the freeze control performed on each application.

S35: The Cgroups subsystem allocates the reclaimed system resource for starting the leftmost home screen.

A cpuset subsystem and a cpu subsystem in the Cgroups subsystem cooperate to increase CPU usage of a foreground Window Manager Service and allocate the reclaimed system resource to the Window Manager Service.

S36: The Window Manager Service starts the animation effect.

S37: Loading of a first frame of an interface of the leftmost home screen is completed.

In this case, the interface of the electronic device is shown in (b). After the loading of the first frame of the interface of the leftmost home screen is completed, the content page may be displayed on the desktop.

S38: The Window Manager Service instructs the Cgroups subsystem to perform unfreezing.

After the loading of the first frame of the interface of the leftmost home screen is completed, the Window Manager Service may instruct the Cgroups subsystem to unfreeze the background APP, so that the background APP may obtain the system resource.

S39: The Cgroups subsystem releases freeze control of each application running in the background.

In a possible implementation, after unfreezing the background application, the Cgroups subsystem reclaims previously allocated additional system resources from the foreground operation, and reallocates the system resource to each application running in the background.

In another possible implementation, the previously allocated additional system resources are reclaimed from the foreground operation and allocated to applications running in the background, so that each application running in the background restores the system resource before the freeze control.

A cpuset subsystem and a cpu subsystem in the Cgroups subsystem cooperate to increase CPU usage of the background APP and allocate the system resources to the background application.

Based on the above, through the technical solution provided in embodiments of this application, when switching of the leftmost home screen is performed, the freeze control for the background APP is no longer performed based on a fixed preset time, but freezing is triggered when an operation event is reported to the Input subsystem, and unfreezing is performed after the loading of the first frame of the leftmost home screen is completed, thereby improving flexibility, reasonableness, and an effect of the freeze control. When a user quickly triggers an animation effect again after switching to the leftmost home screen, for example, switching from the leftmost home screen to the desktop home page, a conflict in the freezing strategy does not occur, thereby effectively increasing a foreground response speed and enhancing user experience. In addition, in view of varying capabilities of chips used in the electronic device, in the solution of this application, engineering experiment adjustment based on a product or chip granularity does not need to be performed, which is highly practical.

In addition, in another possible implementation, the Input subsystem may report the operation event to the desktop application, and when determining, based on an identification result of the operation event, that freeze control needs to be performed, the desktop application instructs the Cgroups freezer subsystem of the electronic device to perform freeze control on all or some of the applications running in the background.

A description is provided below by using an example in which a camera is opened on a desktop.

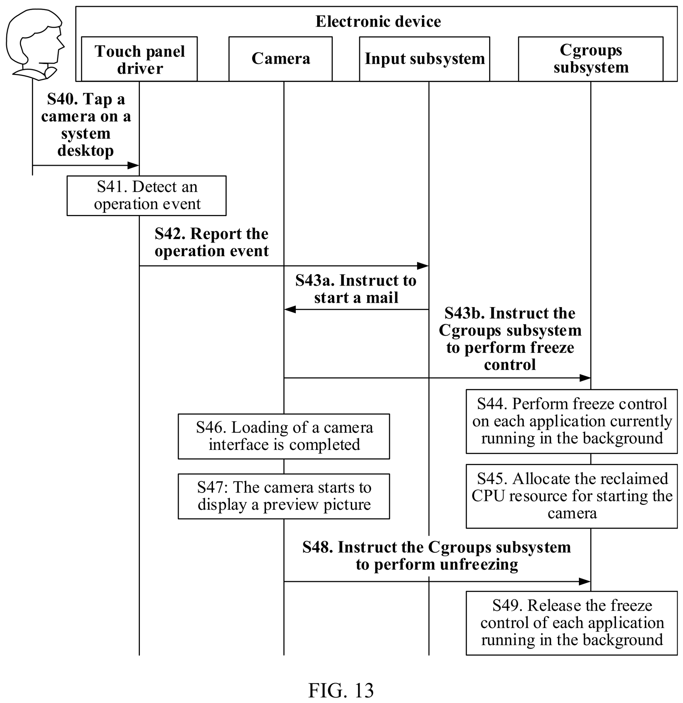

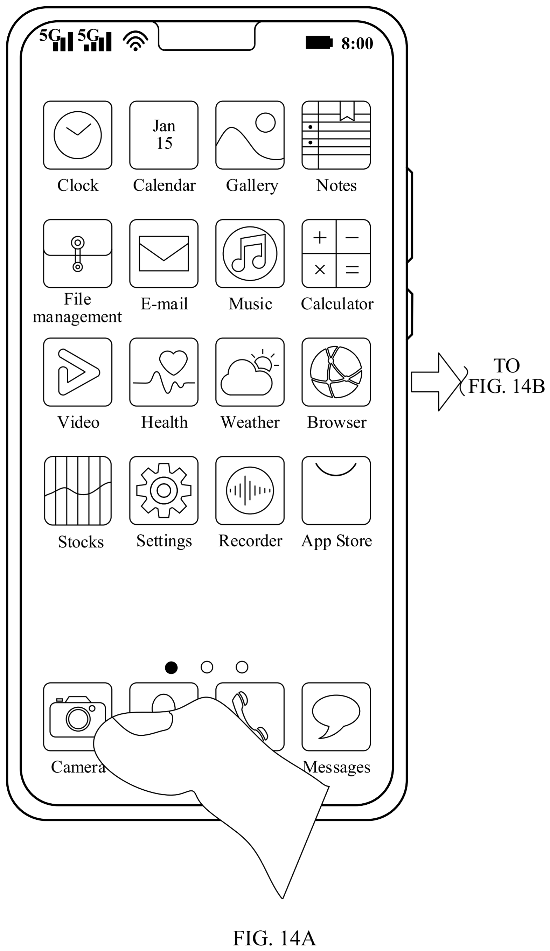

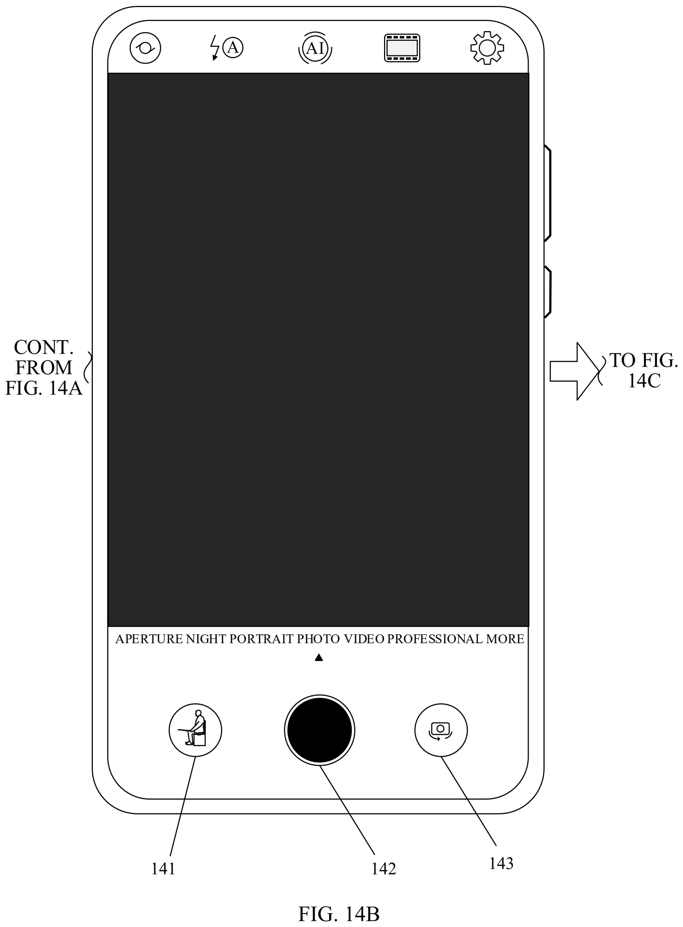

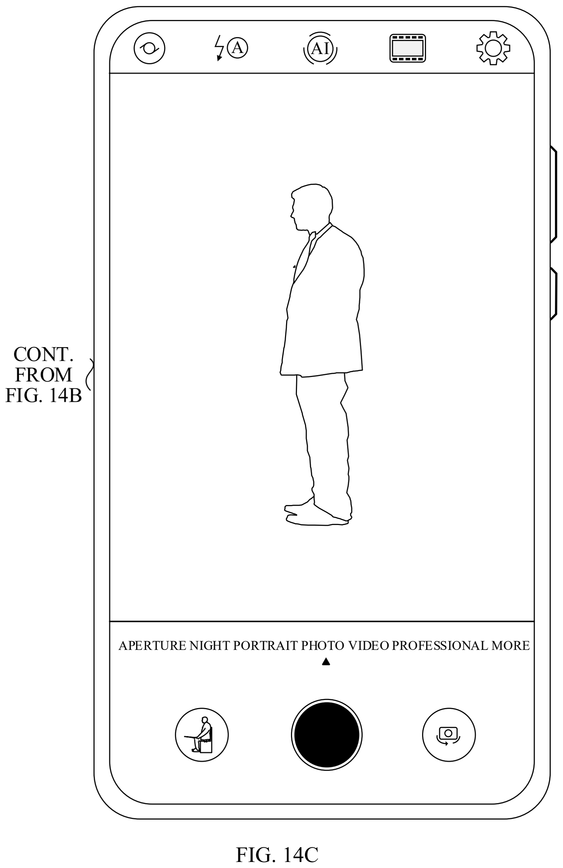

Refer to FIG. 13, FIG. 14A, FIG. 14B, and FIG. 14C together. FIG. 13 is a flowchart of yet another system resource scheduling method according to an embodiment of this application, and FIG. 14A, FIG. 14B, and FIG. 14C are a schematic diagram III of a scenario according to an embodiment of this application.

S40: A user taps a camera on a system desktop.

In this embodiment of this application, an example in which the user opens the camera in the foreground for the first time is used. In other words, the camera has not been opened before and is in a state of running in the background.

S41: A touch panel driver detects an operation event.

After the touch sensor receives a tapping operation performed by the user, a corresponding hardware interrupt is sent to the touch panel driver of a kernel layer. The touch panel driver of the kernel layer processes a touch operation into an original input event (including information such as tapping coordinates and a time stamp of the tapping operation).

S42: The touch panel driver reports the operation event to an Input subsystem.

The original input event is reported to the Input subsystem of an application framework layer, and the Input subsystem identifies a tapping operation on the camera performed by the user corresponding to the input event.

S43a: The Input subsystem instructs the camera to start.

S43b: After the camera is executed at an instrumentation point of the application framework layer, the Cgroups subsystem is instructed to perform freeze control.

After the camera application is triggered to start, the camera is in the application framework layer, and an instrumentation point at a start end in a startup service path is executed. In this case, it is determined that camera startup is triggered, and the Cgroups subsystem is notified that freeze control needs to be performed on the background APP at this point, so as to reclaim and allocate the system resources of the background APP to the camera, thereby accelerating completion of camera startup.

S44: The Cgroups subsystem performs freeze control on each application currently running in the background.

A freezer subsystem of the Cgroups subsystem is configured to implement the freeze control performed on each application.

S45: The Cgroups subsystem allocates the reclaimed system resource for starting the camera.

A cpuset subsystem and a cpu subsystem in the Cgroups subsystem cooperate to increase CPU usage of the camera and allocate the reclaimed system resource to the camera application.

S46: Loading of a camera interface is completed.

Refer to FIG. 14A, FIG. 14B, and FIG. 14C. FIG. 14A is a schematic diagram showing that a user taps a camera icon on a desktop to open a mail APP; FIG. 14B shows a schematic diagram of a loaded camera interface after the camera icon is tapped; and FIG. 14C shows a schematic diagram of an interface of the camera on which a preview picture starts to be displayed.

After loading of the camera interface is completed, a device interface is in a state of FIG. 14B at this point, the camera application completes loading of the interface at this point, and the preview picture has not yet been displayed based on an obtained data frame. The state of FIG. 14B generally lasts for a relatively short time, and a duration thereof is related to hardware of the device. This is not specifically limited in embodiments of this application.

The bottom of the camera interface generally includes a picture preview box 141, a shooting button 142, and a virtual lens reversal button 143. The picture preview box 141 is configured to present a picture photographed last time. The shooting button 142 is configured to trigger shooting. The virtual lens reversal button 143 is configured to implement switching between a front camera and a rear camera of the electronic device.

S47: The camera starts to display the preview picture.

In this case, the device interface is in a state of FIG. 14C, characterizing that the camera opening operation at this time is completed.

S48: The Cgroups subsystem is instructed to perform unfreezing.

After the camera is started, the camera is in the application framework layer, an instrumentation point at a termination end in a startup service path is executed, and instructing the Cgroups subsystem to unfreeze the background APP is triggered, so that the background APP may obtain a system resource. In this embodiment, in the process of reporting the camera tapping event to the completion of the camera preview picture loading, the camera application can obtain more system resources, so as to shorten time spent in the entire process, saving time for the user to wait for the preview picture to appear, thereby improving user experience.

S49: The Cgroups subsystem releases freeze control of each application running in the background.

When determining that turn-on of the camera is completed, the Cgroups subsystem unfreezes each application running in the background.

In a possible implementation, after unfreezing the background application, the Cgroups subsystem reclaims previously allocated additional system resources from the foreground operation, and reallocates the system resource to each application running in the background.

In another possible implementation, the previously allocated additional system resources are reclaimed from the foreground operation and allocated to applications running in the background, so that each application running in the background restores the system resource before the freeze control.

A cpuset subsystem and a cpu subsystem in the Cgroups subsystem cooperate to increase CPU usage of the background APP and allocate the system resources to the background application.

Based on the above, through the technical solution provided in embodiments of this application, when the camera is opened in the foreground, freeze control of the background APP is triggered after an operation event is reported to the Input subsystem, and unfreezing is performed after loading of the preview picture of the camera is completed, thereby improving flexibility, reasonableness, and the effect of the freeze control, and effectively increasing a foreground response speed and enhancing user experience. In addition, in view of varying capabilities of chips used in the electronic device, in the solution of this application, engineering experiment adjustment based on a product or chip granularity does not need to be performed, which is highly practical.

Further, when an interactive operation is triggered in an application, the solution of this application can also increase a response speed of the application. A description is provided through an example below.

Based on the descriptions in FIG. 13, FIG. 14A, FIG. 14B, and FIG. 14C, a description is provided below first through an example in which a photographing operation is triggered in a camera.

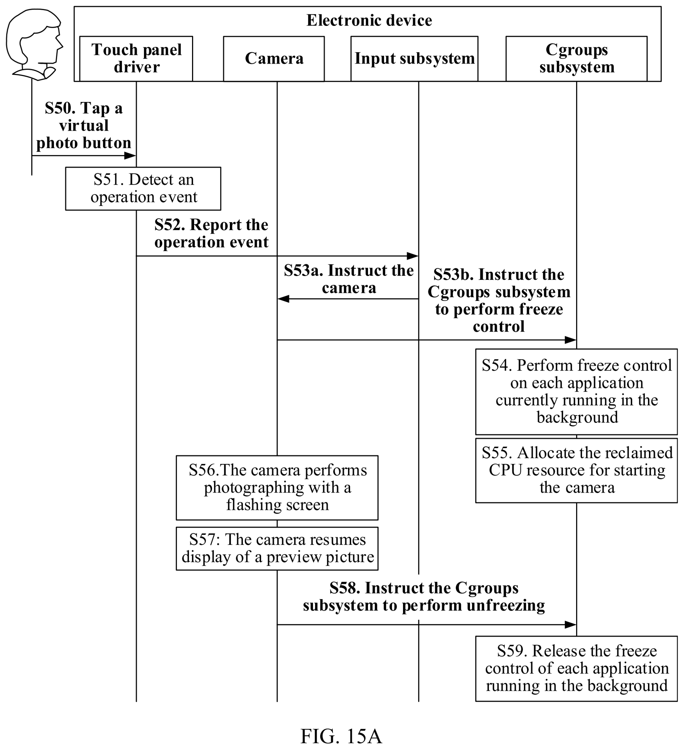

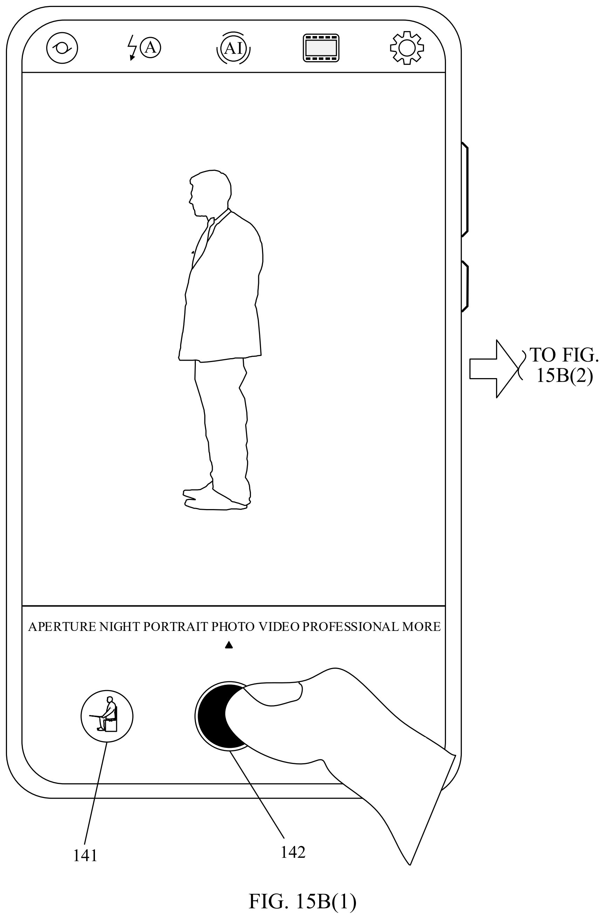

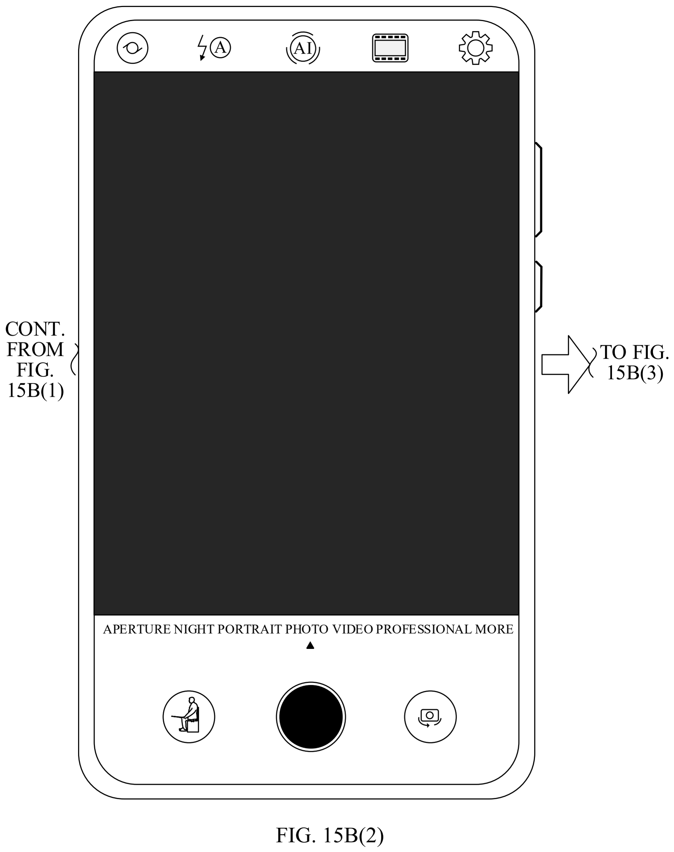

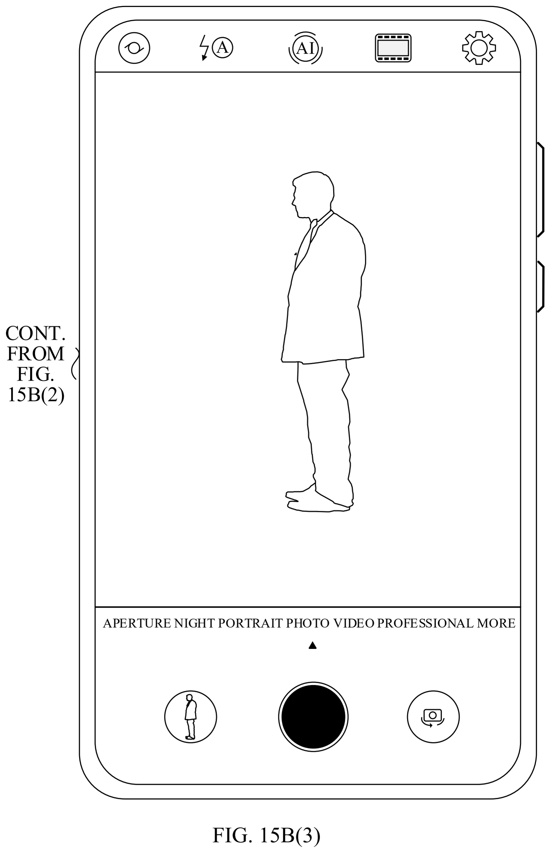

Refer to FIG. 15A, FIG. 15B(1), FIG. 15B(2), and FIG. 15B(3) together. FIG. 15A is a flowchart of another system resource scheduling method according to an embodiment of this application; and FIG. 15B(1), FIG. 15B(2), and FIG. 15B(3) are a schematic diagram IV of a scenario according to an embodiment of this application.

S50: A user taps a shooting button.

After a preview interface of a camera program is displayed, the user may view a previous photo in a picture preview box 141.

After observing an appropriate image through the preview picture, the user triggers a shooting operation by tapping the shooting button 142.

FIG. 15B(1) shows a schematic diagram when a user taps the shooting button 142.

S51: A touch panel driver detects an operation event.

After the touch sensor receives a tapping operation performed by the user, a corresponding hardware interrupt is sent to the touch panel driver of a kernel layer. The touch panel driver of the kernel layer processes a touch operation into an original input event (including information such as tapping coordinates and a time stamp of the tapping operation).

S52: The touch panel driver reports the operation event to an Input subsystem.

The original input event is reported to the Input subsystem of an application framework layer, and the Input subsystem identifies the input event as a photographing event of the camera.

S53a: The Input subsystem notifies the camera.

The Input subsystem instructs the camera to perform a photographing event.

S53b: After the camera is executed at an instrumentation point of the application framework layer, the Cgroups subsystem is instructed to perform freeze control.

After a photographing service of the camera is triggered, the camera is in the application framework layer, and an instrumentation point at a start end in a photographing service path is executed. In this case, it is determined that the photographing service is triggered, and the Cgroups subsystem is notified that freeze control needs to be performed on the background APP at this point, so as to reclaim and allocate system resources of the background APP to the camera, thereby ensuring smooth shooting of the camera, and causing the camera to resume display of the preview picture as soon as possible.

S54: The Cgroups subsystem performs freeze control on each application currently running in the background.

A freezer subsystem of the Cgroups subsystem is configured to implement the freeze control performed on each application.

S55: The Cgroups subsystem allocates the reclaimed system resource to the camera.

A cpuset subsystem and a cpu subsystem in the Cgroups subsystem cooperate to increase CPU usage of the camera and allocate the system resource to the camera application.

S56: The camera performs photographing with a flashing screen.

The camera determines, based on the notification of the Input subsystem, that a photographing action needs to be performed at this point.

A state in which the camera performs photographing with a flashing screen corresponds to FIG. 15B(2). In this case, the camera is in a process of generating a captured photo this time. The picture preview box 141 of the camera interface generally still displays a photo captured last time. The camera is temporarily in a black screen state, which visually appears as a flashing screen.

S57: The camera resumes display of the preview picture.

After the photo captured this time is generated, the camera resumes display of the preview picture, corresponding to FIG. 15B(3). In this case, the picture preview box 141 of the camera interface displays the photo captured this time, and the preview picture of the camera is a current picture. The time of this foreground operation may be considered as a time length from a time when the Input subsystem receives the operation event to a time when the camera resumes display of the preview picture.

S58: The Cgroups subsystem is instructed to perform unfreezing.

After the camera finishes photographing, an instrumentation point for performing a photographing service is executed. In this case, it is determined that the photographing service ends, and the Cgroups subsystem is instructed to release the freeze control.

S59: The Cgroups subsystem releases freeze control of each application running in the background.

In a possible implementation, after unfreezing the background application, the Cgroups subsystem reclaims previously allocated additional system resources from the foreground operation, and reallocates the system resource to each application running in the background.

In another possible implementation, the previously allocated additional system resources are reclaimed from the foreground operation and allocated to applications running in the background, so that each application running in the background restores the system resource before the freeze control.

A cpuset subsystem and a cpu subsystem in the Cgroups subsystem cooperate to increase CPU usage of the background APP and allocate the system resources to the background application.

It may be understood that a principle when a camera is used to perform a video recording operation is similar, and details are not described herein again.

In this embodiment, in a process of reporting the shooting button tapping event to resuming display of the preview picture by the camera, the camera application can obtain more system resources, so as to shorten a time spent in the entire process, that is, shorten a time of a flashing screen when photographing, and shorten a time for the user to wait to resume the preview picture, thereby improving smoothness of the photographing process, and improving user experience.

In the foregoing embodiment, a description is provided by using a photographing operation is used as an example. In addition, when a transition operation is triggered in another application, the technical solution of this application may also be used. An instant messaging APP is used as an example for description below.

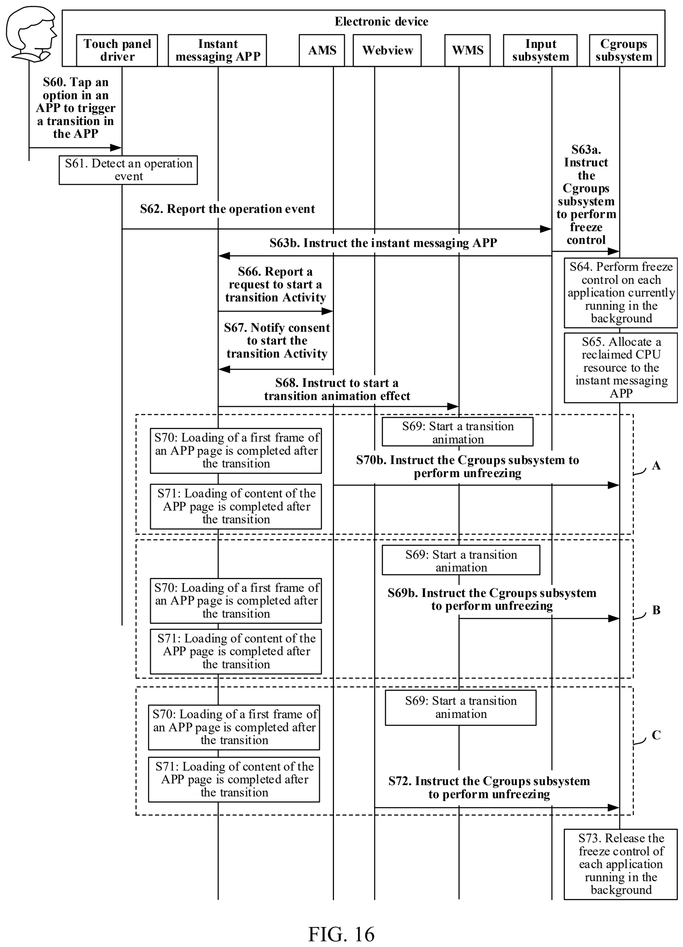

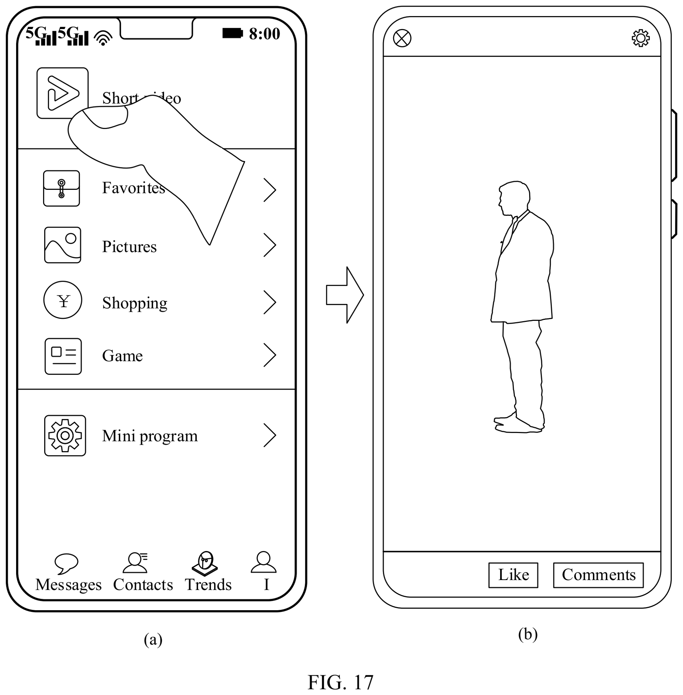

Refer to FIG. 16 and (a) and (b) of FIG. 17 together. FIG. 16 is a flowchart of still another system resource scheduling method according to an embodiment of this application; and (a) and (b) of FIG. 17 are a schematic diagram V of a scenario according to an embodiment of this application.

S60: A user taps an option in an APP to trigger a transition in the APP.

(a) of FIG. 17 shows a schematic diagram when the user taps an option on an interface of an instant messaging APP to trigger a transition in the APP, and an interface after the transition is shown as (b) of FIG. 17. In other words, after a short video is tapped on the page, an interface for playing the short video is displayed. In this case, an activity change exists in the application.

S61: A touch panel driver detects an operation event.

After the touch sensor receives a tapping operation performed by the user, a corresponding hardware interrupt is sent to the touch panel driver of a kernel layer. The touch panel driver of the kernel layer processes a touch operation into an original input event.

S62: The touch panel driver reports the operation event to an Input subsystem.

The original input event is reported to the Input subsystem of an application framework layer, and the Input subsystem identifies a tapping operation performed on a screen by the user on an interface of an instant messaging APP corresponding to the input event.

S63a: The Input subsystem instructs a Cgroups subsystem to perform freeze control.

The Input subsystem notifies the Cgroups subsystem that freeze control needs to be performed on the background APP at this point, so as to reclaim and allocate the system resources of the background APP to a Window Manager Service to achieve a transition animation effect and accelerate completion of loading of an interface after the transition.

S63b: The Input subsystem notifies the instant messaging APP.

S64: The Cgroups subsystem performs freeze control on each application currently running in the background.

A freezer subsystem of the Cgroups subsystem is configured to implement the freeze control performed on each application.

S65: The Cgroups subsystem allocates the reclaimed system resource to the instant messaging APP.

S66: The instant messaging APP reports a request to an Activity Manager Service to start a transition Activity.

The instant messaging APP determines, based on the notification of the Input subsystem, that a transition needs to be performed at this point, the transition Activity needs to be started, and reports the request to start the transition Activity to the Activity Manager Service.

S67: The Activity Manager Service notifies the instant messaging APP that the Activity Manager Service agrees to start the transition Activity.

S68: The instant messaging APP instructs the Window Manager Service to start a transition animation effect.

In this case, the following three implementations may exist.

In an implementation A in the figure:

S69: The Window Manager Service starts a transition animation.

The Window Manager Service performs window switching based on a location, a size, and a layout of an interface window, and starts an animation effect of a transition.

S70: Loading of a first frame of an APP page is completed after the transition.

S70b: The AMS instructs the Cgroups subsystem to perform unfreezing.

The AMS of the application framework layer instructs the Cgroups subsystem to perform unfreezing after the transition activity ends.

S71: Loading of content of the APP page is completed after the transition.

In an implementation B in the figure:

S69: The Window Manager Service starts a transition animation.

The Window Manager Service performs window switching based on a location, a size, and a layout of an interface window, and starts an animation effect of a transition.

S69b: The WMS instructs the Cgroups subsystem to perform unfreezing.

The WMS of the application framework layer instructs the Cgroups subsystem to perform unfreezing after the transition animation ends.

S70: Loading of a first frame of an APP page is completed after the transition.

S71: Loading of content of the APP page is completed after the transition.

After the application uses a Webview component, an implementation C in the figure may further be used:
S69: The Window Manager Service starts a transition animation.

The Window Manager Service performs window switching based on a location, a size, and a layout of an interface window, and starts an animation effect of a transition.

S70: Loading of a first frame of an APP page is completed after the transition.

S71: Loading of content of the APP page is completed after the transition.

S72: The Webview instructs the Cgroups subsystem to perform unfreezing.

The Webview component of the application framework layer instructs the Cgroups subsystem to unfreeze the background APP, so that the background APP may obtain a system resource.

S73: The Cgroups subsystem releases freeze control of each application running in the background.

In a possible implementation, after unfreezing the background application, the Cgroups subsystem reclaims previously allocated additional system resources from the foreground operation, and reallocates the system resource to each application running in the background.

In another possible implementation, the previously allocated additional system resources are reclaimed from the foreground operation and allocated to applications running in the background, so that each application running in the background restores the system resource before the freeze control.

A cpuset subsystem and a cpu subsystem in the Cgroups subsystem cooperate to increase CPU usage of the background APP and allocate the system resources to the background application.

Based on the above, through the technical solution provided in embodiments of this application, when the transition animation effect is triggered on the application interface, the background APP can be frozen when an operation event is reported to the Input subsystem, and the background APP is unfrozen upon completion of the loading of the page content after switching, so that the transition animation is smoother, thereby improving flexibility, reasonableness, and the effect of freeze control, and effectively increasing a foreground response speed and enhancing user experience. In addition, in view of varying capabilities of chips used in the electronic device, in the solution of this application, engineering experiment adjustment based on a product or chip granularity does not need to be performed, which is highly practical.

In another possible implementation, an instrumentation point may be set in a startup path of a short video service. It is detected that the instrumentation point is located in a service path of the framework layer Framework. When the service path of a short video is accessed, the instrumentation point is executed, so as to implement detection. In this case, the application may instruct the control group freeze Cgroups freezer subsystem of the electronic device to perform freeze control on all or some of the applications running in the background. In addition, instrumentation is also performed on an end point of each service path. When the instrumentation is performed, it may be determined that the service corresponding to the foreground operation is ended at this point, that is, starting of the short video service is completed, and the Cgroups freezer subsystem is instructed to release the freeze control.

The foregoing describes an implementation in which in a single application, a transition triggered through a foreground operation results in a change of an activity, and acceleration of a foreground response is implemented through freeze control. In some other embodiments, different applications may trigger transitions between each other, resulting in the change of the activity. For example, when a first page of a second application is switched to a third page of a third application, upon completion of loading of content of the third page, the third application determines that the foreground operation is completed, and instructs the Cgroups freezer subsystem to release the freeze control of each application. For example, the second application is a shopping application, the third application is a payment application, and a jump to a payment page of the third application is performed through a checkout page of the second application for password input. For another example, the second application is a video playback software, and the third application is an instant messaging APP. The user may select, through a login interface of the video playback software, a login account as an account of the instant messaging APP, thereby triggering a page transition to the instant messaging APP for authorization. The solution of this application may also be applied to the foregoing transition scenario. After a critical path of a service is triggered, a transition animation effect is smooth without stuttering through freeze control, thereby improving user experience.

A description is provided below by using an example in which a hand-following animation effect is triggered on a desktop.

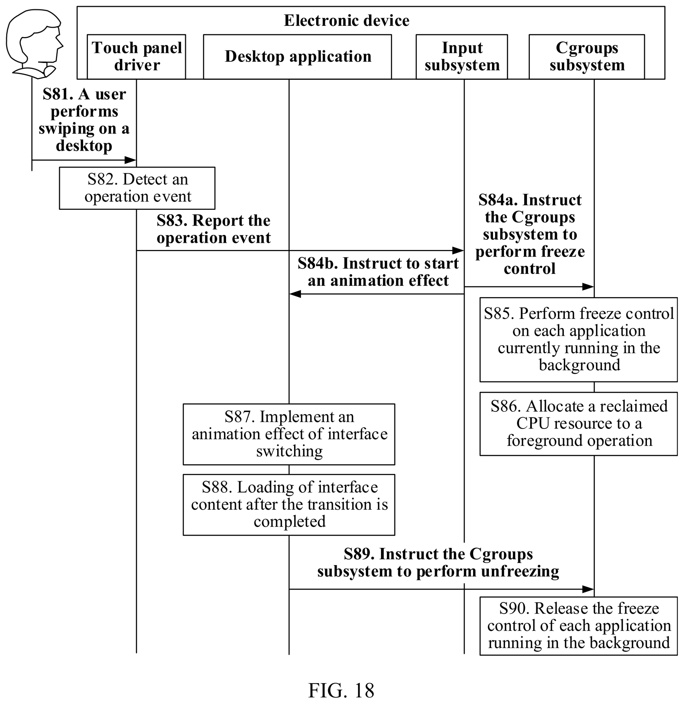

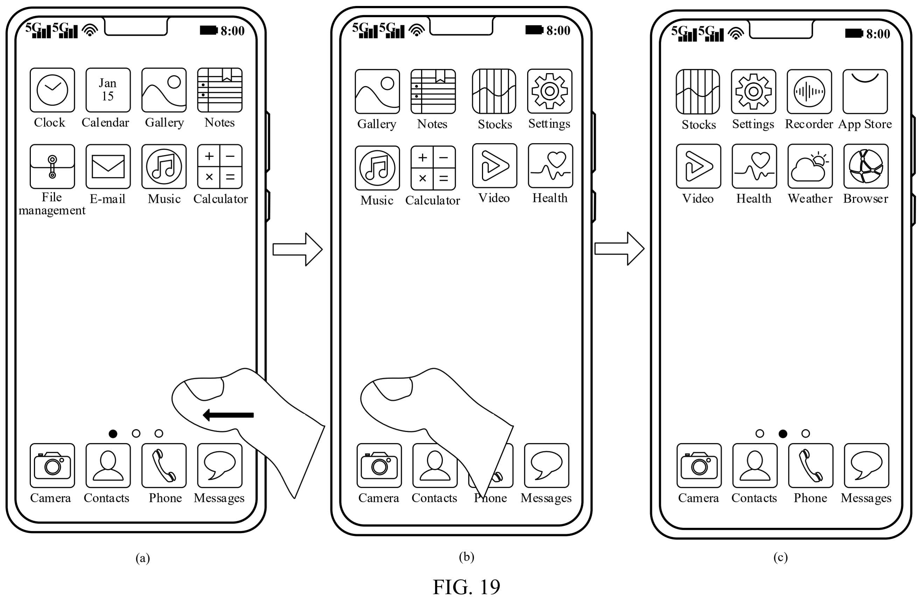

Refer to FIG. 18 and (a), (b), and (c) of FIG. 19 together. FIG. 18 is a flowchart of yet another system resource scheduling method according to an embodiment of this application, and (a), (b), and (c) of FIG. 19 are a schematic diagram VI of a scenario according to an embodiment of this application.

In embodiments of this application, an example in which a user triggers window switching on a desktop is used. Other desktop dynamic effects, including, but not limited to, pulling down a status bar, pulling up a status bar, side swiping, application shifting, a dynamic effect of opening a desktop editing mode, opening a desktop folder, closing a desktop folder, creation and merging of folders, releasing a folder, location exchange of desktop applications, a tapping effect, a touching and holding effect, a dynamic effect corresponding to an application installation prompt, or entering a single-hand operation mode, have the similar principle. Details are not described herein again.

(a) of FIG. 19 is a schematic diagram showing that a user swipes leftward on a home page of a desktop; (b) is a schematic diagram of an intermediate state when the home page of the desktop transitions to a second page of the desktop during finger swiping; and (c) is a schematic diagram of switching to the second page of the desktop after the swiping ends. The method includes the following steps:
S81: A user performs swiping on a desktop.

S82: A touch panel driver detects an operation event.

After the touch sensor receives a swiping operation performed by the user, a corresponding hardware interrupt is sent to the touch panel driver of a kernel layer. The touch panel driver of the kernel layer processes a swiping operation into an original input event (including information such as tapping coordinates and a time stamp of the tapping operation).

S83: The touch panel driver reports a swiping event to an Input subsystem.

The original input event is reported to the Input subsystem of an application framework layer, and the Input subsystem identifies that the input event corresponds to the swiping on the desktop by the user.

S84a: The Input subsystem instructs a Cgroups subsystem to perform freeze control.

The Input subsystem notifies the Cgroups subsystem that freeze control needs to be performed on the background APP at this point, so as to reclaim and allocate system resources of the background APP to a foreground operation, thereby ensuring smoothness of a desktop animation effect.

S84b: The Input subsystem instructs the desktop application to start an animation effect.

S85: The Cgroups subsystem performs freeze control on each application currently running in the background.

A freezer subsystem of the Cgroups subsystem is configured to implement the freeze control performed on each application.

S86: The Cgroups subsystem allocates the reclaimed system resource to a foreground operation.

A cpuset subsystem and a cpu subsystem in the Cgroups subsystem cooperate to increase CPU usage of the foreground desktop application and allocate the reclaimed system resource to the desktop application.

S87: The desktop application implements an animation effect of interface switching.

S88: Loading of interface content after the transition is completed.

S89: The Cgroups subsystem is instructed to perform unfreezing.

After the interface switching is completed, the Cgroups subsystem is instructed to unfreeze the background APP, so that the background APP may obtain a system resource.

S90: The Cgroups subsystem releases freeze control of each application running in the background.

Based on the above, through the technical solution provided in embodiments of this application, when the animation effect is triggered on the desktop, freeze control for a background APP is no longer performed based on a fixed preset time, but freezing is performed based on a coverage duration of the animation effect, thereby improving flexibility, reasonableness, and an effect of the freeze control, and effectively increasing a foreground response speed and enhancing user experience. In addition, in view of varying capabilities of chips used in the electronic device, in the solution of this application, engineering experiment adjustment based on a product or chip granularity does not need to be performed, which is highly practical.

Based on the system resource scheduling method provided in the above embodiments, an embodiment of this application further provides an electronic device. A detailed description is provided below with reference to the accompanying drawings.

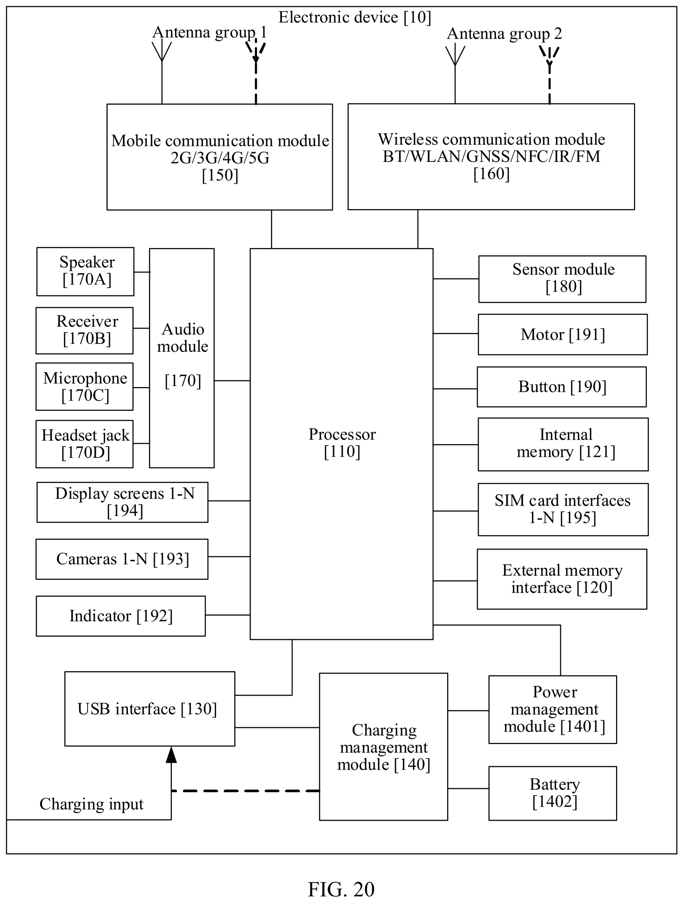

Referring to FIG. 20, it is a schematic diagram of an electronic device according to an embodiment of this application.

The electronic device may be a mobile phone, a wearable electronic device (such as a smartwatch), a tablet computer, an augmented reality (augmented reality, AR) device, a virtual reality (virtual reality, VR) device, an on-board computer, or the like. An Android system may be run on the electronic device.

An electronic device 10 may include a processor 110, an external memory interface 120, an internal memory 121, a universal serial bus (universal serial bus, USB) interface 130, a charging management module 140, a power management module 1401, a battery 1402, an antenna group 1, an antenna group 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like.

The sensor module 180 may include one or more of a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that an example structure in this embodiment of the present invention does not constitute a specific limitation on the electronic device 10. In some other embodiments of this application, the electronic device 10 may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent devices, or may be integrated into one or more processors. The controller may generate an operation control signal based on an instruction operation code and a timing signal, and control obtaining and execution of an instruction.

A memory may be further arranged in the processor 110, which is configured to store an instruction and data. In some embodiments, the memory in the processor 110 is a cache memory. The memory may store the instruction or data that has just been used or recycled by the processor 110. If the processor 110 needs to use the instruction or the data again, the processor may directly invoke the instruction or the data from the memory. Repeated access is avoided, and waiting time of the processor 110 is reduced, thereby improving system efficiency.

The USB interface 130 is an interface that complies with the USB standard specification, and may be specifically a Mini USB interface, a Micro USB interface, a USB Type C interface, or the like. The USB interface 130 may be configured to connect to a charger to charge the electronic device 10, or may be configured to perform data transmission between the electronic device 10 and a peripheral device. The interface may alternatively be configured to connect to a headset to play audio through the headset. The interface may further be configured to connect to another electronic device such as an AR device.

It may be understood that an interface connection relationship between the modules that is shown in this embodiment of this application is merely an example for description, and does not constitute a limitation on the structure of the electronic device 10. In some other embodiments of this application, the electronic device 10 may also use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 10. The charging management module 140 may further supply power to the electronic device through the power management module 1401 while charging the battery 1402.

The power management module 1401 is configured to connect to the battery 1402, the charging management module 140, and the processor 110. In some other embodiments, the power management module 141 and the charging management module 140 may also be arranged in a same device.

A wireless communication function of the electronic device 10 may be implemented through the antenna group 1, the antenna group 2, the mobile communication module 150, the wireless communication module 160, the modem processor, the baseband processor, and the like.

The electronic device 10 implements a display function through the GPU, the display screen 194, the application processor, and the like.

The display screen 194 is configured to display an image, a video, and the like. In some embodiments, the electronic device 10 may include 1 or N display screens 194, where N is a positive integer greater than 1.

The electronic device 10 may implement a shooting function through the image signal processor (Image Signal Processor, ISP), the camera 193, the video codec, the GPU, the display screen 194, the application processor, and the like. The camera 193 is configured to capture a static image or a video. In some embodiments, the electronic device 10 may include 1 or N cameras 193, where N is a positive integer greater than 1.

The processor 110 of the electronic device includes a kernel. The kernel calls a corresponding program unit from the memory. One or more kernels may be set. The foregoing system resource scheduling method is implemented by adjusting a kernel parameter.

An embodiment of this application provides a storage medium, having a program stored therein, the program, when executed by a processor, implementing the system resource scheduling method.

A computer-readable medium includes both permanent and non-permanent, removable and non-removable media. Information storage may be implemented through any method or technology. The information may be a computer-readable instruction, a data structure, a program module, or other data. An example of the computer storage medium includes, but is not limited to, a phase change memory (parameter random access memory, PRAM), a static random access memory (static random access memory, SRAM), a dynamic random access memory (dynamic random access memory, DRAM), another type of random access memory (random access memory, RAM), a read only memory (read only memory, ROM), an electrically-erasable programmable read-only memory (electrically-erasable programmable read-only memory, EEPROM), a flash memory, or another memory technology.

In a typical configuration, a device includes one or more processors (CPUs), a memory, and a bus. The device may further include an input/output interface, a network interface, and the like.

A person skilled in the art should understand that embodiments of this application may be provided as a method, a system, or a computer program product. Therefore, this application may be implemented in the form of a fully hardware-based embodiment, a fully software-based embodiment, or an embodiment combining both software and hardware aspects.

Based on the above, the foregoing embodiments are merely intended to describe the technical solutions of this application, and are not intended to limit this application. Although this application is described in detail with reference to the above embodiments, a person of ordinary skill in the art should understand that modifications may still be made to the technical solutions described in the foregoing embodiments, or equivalent replacements may be made to the part of the technical features. However, these modifications or substitutions do not make the essence of the corresponding technical solutions depart from the spirit and scope of the technical solutions in embodiments of this application.

## Claims

1. A system resource scheduling method, applied to an electronic device, the method comprising:
performing freeze control on all or some applications running in a background when an interactive operation triggered by a user on a display interface of the electronic device is detected, wherein the freeze control is used to reclaim a system resource allocated to a corresponding application;
allocating the reclaimed system resource to a service corresponding to the interactive operation on the display interface; and
releasing the freeze control on all or some of the applications running in the background when the service corresponding to the interactive operation on the display interface is completed.

2. The method according to claim 1, wherein the performing freeze control on all or some applications running in a background when an interactive operation triggered by a user on a display interface of the electronic device is detected specifically comprises:
reporting, by a hardware driver of the electronic device, an operation event corresponding to the interactive operation on the display interface to an input Input subsystem of the electronic device; and
instructing, by the Input subsystem, a control group freeze Cgroups freezer subsystem of the electronic device to perform freeze control on all or some of the applications running in the background.

3. The method according to claim 1, wherein when the interactive operation on the display interface is an operation triggered by the user on a desktop, the performing freeze control on all or some applications running in a background when an interactive operation triggered by a user on a display interface of the electronic device is detected specifically comprises:
reporting, by a hardware driver of the electronic device, an operation event corresponding to the interactive operation on the display interface to an input Input subsystem of the electronic device;
reporting, by the Input subsystem, the operation event to a desktop application; and
instructing, by the desktop application when determining, based on an identification result of the operation event, that freeze control needs to be performed, the control group freeze Cgroups freezer subsystem of the electronic device to perform freeze control on all or some of the applications running in the background.

4. The method according to claim 1, wherein the performing freeze control on all or some applications running in a background when an interactive operation triggered by a user on a display interface of the electronic device is detected specifically comprises:
determining that the user triggers the interactive operation on the display interface, and instructing the control group freeze Cgroups freezer subsystem of the electronic device to perform freeze control on all or some of the applications running in the background when a detection instrumentation point existing in a service path of an application is executed, wherein each detection instrumentation point is located in a service path of the interactive operation on each display interface in a framework layer Framework.

5. The method according to claim 4, wherein the service path of the application is any one of the following:
a startup service path of the application or a service path of a transition animation of the application.

6. The method according to claim 1, wherein the system resource comprises one or more of the following:
a central processing unit CPU resource, a network bandwidth resource, an input/output I/O channel resource, or a framework layer Framework system resource.

7. The method according to claim 1, wherein the interactive operation on the display interface is starting a first application, and the releasing the freeze control on all or some of the applications running in the background when the service corresponding to the interactive operation on the display interface is completed specifically comprises:
determining that the service corresponding to the interactive operation on the display interface is completed after loading of a first frame of a main interface of the first application is completed, and releasing the freeze control on all or some of the applications running in the background.

8. The method according to claim 1, wherein the interactive operation on the display interface is starting a first application, and the releasing the freeze control on all or some of the applications running in the background when the service corresponding to the interactive operation on the display interface is completed specifically comprises:
determining that the service corresponding to the interactive operation on the display interface is completed after loading of content of a first frame of the first application is completed, and releasing the freeze control on all or some of the applications running in the background.

9. The method according to claim 1, wherein the interactive operation on the display interface is starting a camera application, and the releasing the freeze control on all or some of the applications running in the background when the service corresponding to the interactive operation on the display interface is completed specifically comprises:
determining that the service corresponding to the interactive operation on the display interface is completed when a camera interface starts to display a preview picture, and releasing the freeze control on all or some of the applications running in the background.

10. The method according to claim 1, wherein the interactive operation on the display interface is tapping a shooting button on a camera application interface, and the releasing the freeze control on all or some of the applications running in the background when the interactive operation on the display interface is completed specifically comprises:
determining that the service corresponding to the interactive operation on the display interface is completed when the camera application completes shooting and resumes display of the preview picture, and releasing the freeze control on all or some of the applications running in the background.

11. The method according to claim 1, wherein the interactive operation on the display interface is triggering an animation effect on a desktop, and the releasing the freeze control on all or some of the applications running in the background when the service corresponding to the interactive operation on the display interface is completed specifically comprises:
determining that the service corresponding to the interactive operation on the display interface is completed when the animation effect ends, and releasing the freeze control on all or some of the applications running in the background.

12. The method according to claim 1, wherein the interactive operation on the display interface is switching from a first page of a second application to a second page of the second application, and the releasing the freeze control on all or some of the applications running in the background when the service corresponding to the interactive operation on the display interface is completed specifically comprises:
determining that the service corresponding to the interactive operation on the display interface is completed after loading of content of the second page is completed, and releasing the freeze control on all or some of the applications running in the background.

13. The method according to claim 1, wherein the interactive operation on the display interface is switching from a second page of a second application to a third page of a third application, and the releasing the freeze control on each of the applications when the service corresponding to the interactive operation on the display interface is completed specifically comprises:
determining that the service corresponding to the interactive operation on the display interface is completed after loading of content of the third page is completed, and releasing the freeze control on each of the applications.

14. The method according to any one of claims 1 to 13, wherein the releasing the freeze control on all or some of the applications running in the background specifically comprises:
reclaiming the reclaimed system resource from the service corresponding to the interactive operation on the display interface; and
reallocating the reclaimed system resource to all or some of the applications running in the background.

15. The method according to any one of claims 1 to 13, wherein the releasing the freeze control on all or some of the applications running in the background specifically comprises:
reclaiming the reclaimed system resource from the service corresponding to the interactive operation on the display interface; and
allocating the reclaimed system resource, so that all or some of the applications running in the background recover the system resource before the freeze control.

16. An electronic device, comprising a memory and a processor, wherein the memory has a computer program stored therein, and the processor is configured to invoke and execute the computer program, to implement the system resource scheduling method according to any one of claims 1 to 15.

17. A computer-readable storage medium, having a computer program stored therein, wherein the computer program, when executed by an electronic device, implements the system resource scheduling method according to any one of claims 1 to *15.*
